(19) Europäisches Patentamt

European Patent Office

Office européen des brevets

(11) **EP 3 718 640 B1**

(12) # EUROPÄISCHE PATENTSCHRIFT

(45) Veröffentlichungstag und Bekanntmachung des Hinweises auf die Patenterteilung:
**20.10.2021  Patentblatt 2021/42**

(51) Int Cl.:
**B05B 1/30** *(2006.01)*    **B05B 15/58** *(2018.01)*
**B05B 12/08** *(2006.01)*    **B05B 12/04** *(2006.01)*
B05B 12/14 *(2006.01)*    B05B 13/04 *(2006.01)*

(21) Anmeldenummer: **20170025.9**

(22) Anmeldetag: **01.12.2017**

(54) **BESCHICHTUNGSEINRICHTUNG UND ZUGEHÖRIGES BETRIEBSVERFAHREN**

COATING DEVICE AND CORRESPONDING OPERATING METHOD

DISPOSITIF DE REVÊTEMENT ET PROCÉDÉ DE FONCTIONNEMENT ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2016  DE 102016014956**

(43) Veröffentlichungstag der Anmeldung:
**07.10.2020  Patentblatt 2020/41**

(62) Dokumentnummer(n) der früheren Anmeldung(en) nach Art. 76 EPÜ:
**17808444.8 / 3 535 062**

(73) Patentinhaber: **Dürr Systems AG
74321 Bietigheim-Bissingen (DE)**

(72) Erfinder:
• **Fritz, Hans-Georg
73760 Ostfildern (DE)**

• **Wöhr, Benjamin
74363 Eibensbach (DE)**
• **Kleiner, Marcus
74354 Besigheim (DE)**
• **Bubek, Moritz
71640 Ludwigsburg (DE)**
• **Beyl, Timo
74354 Besigheim (DE)**
• **Herre, Frank
71739 Oberriexingen (DE)**
• **Sotzny, Steffen
71720 Oberstenfeld (DE)**

(74) Vertreter: **v. Bezold & Partner Patentanwälte - PartG mbB
Akademiestraße 7
80799 München (DE)**

(56) Entgegenhaltungen:
**JP-A- 2015 193 129**

EP 3 718 640 B1

Beschreibung

Die Erfindung betrifft eine Beschichtungseinrichtung zur Beschichtung von Bauteilen mit einem Beschichtungsmittel, insbesondere zur Lackierung von Kraftfahrzeugkarosseriebauteilen mit einem Lack. Weiterhin betrifft die Erfindung ein entsprechendes Betriebsverfahren für eine solche Beschichtungseinrichtung.

Zur Serienlackierung von Kraftfahrzeugkarosseriebauteilen werden als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Weitere bekannte Zerstäubertypen sind Luftzerstäuber, Airless-Zerstäuber, Airmix-Zerstäuber und Air-Assist-Zerstäuber. Auch diese Zerstäubertypen haben jedoch den Nachteil, dass ein Sprühnebel abgegeben wird, so dass beim Beschichten unerwünschter Overspray entsteht.

Eine neuere Entwicklungslinie sieht dagegen als Applikationsgerät sogenannte Druckköpfe vor, wie sie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl oder - z.B. an Kanten oder Randbereichen - einen Tröpfchenstrahl, der sich nahezu vollständig auf dem zu lackierenden Bauteil niederschlägt, so dass nahezu kein Overspray entsteht.

Bei den bekannten Druckköpfen erfolgt die Lackversorgung entweder drucklos, selbstansaugend, rein physikalisch nach dem Prinzip der kommunizierenden Röhrchen oder mittels eines unter Druck stehenden Lackgefäßes. Diese verschiedenen Typen von Lackversorgungen sind jedoch aus verschiedenen Gründen nachteilig.

Bei selbstansaugenden Lackversorgungen ist das Fördervolumen und damit auch das Ausbringvolumen auf Werte von weniger als 1ml/min begrenzt.

Bei einer Druckförderung kann das Fördervolumen dagegen durch sich verändernde Randbedingungen beeinflusst werden, wie beispielsweise zusetzende Filter oder Schläuche, Querschnittsveränderungen an gequetschten, geknickten oder tordierten Schläuchen, was beispielsweise bei einer Schlauchverlegung in einem Lackierroboter auftreten kann oder bei verstopften Düsen oder Kanälen im Druckkopf.

Da Druckköpfe nach dem Stand der Technik insbesondere Tinten mit einer Viskosität <15mPas ausstoßen, funktionieren die oben genannte Fördermethoden ausreichend gut. Auf Grund der wesentlich höheren Viskosität bei Beschichtungsmitteln, wie z.B. Lacken, sind diese Methoden aber nicht ausreichend, um ein konstantes Beschichtungsmittel-Fördervolumen sicher zu stellen.

Bei der Serienlackierung von Kraftfahrzeugkarosseriebauteilen müssen jedoch qualitativ hochwertige Beschichtungen aufgebracht werden, was nur mit einer konstanten Ausbringmenge des jeweiligen Beschichtungsmittels (z.B. Lack, Kleber, Dichtmittel, Primer) realisiert werden kann. Der störende Einfluss der oben genannten Faktoren nimmt jedoch mit der Viskosität des Beschichtungsmittels zu.

Weiterhin ist zu bemerken, dass die Viskosität von Lacken zur Lackierung von Kraftfahrzeugkarosseriebauteilen so hoch ist, dass zusammen mit der Ausbringmenge und dem Rohr- und Schlauchlängen zwischen Lackreservoir und Applikationsgerät ein Druck aufgebracht werden muss, der groß genug ist, um genügend Lack zum Applikator zu fördern. Die Viskosität der Lacke kann sehr unterschiedlich sein und hängt von einigen Parametern ab, wie z.B. Temperatur und Scherung.

Beim Einsatz der bekannten Druckköpfe als Applikationsgerät bei der Serienlackierung von Kraftfahrzeugkarosseriebauteilen ist die Lackversorgung also in der Praxis noch unbefriedigend.

Zum technischen Hintergrund der Erfindung ist auch hinzuweisen auf DE 10 2014 013 158 A1, DE 10 2008 053 178 A1, DE 10 2009 038 462 A1, DE 10 2006 021 623 A1, JP 2013/188 706 A und US 6 540 835 B2.

Schließlich offenbart JP 2015-193 129 A eine Beschichtungseinrichtung gemäß dem Oberbegriff von Anspruch 1 und ein Beschichtungsverfahren gemäß dem Oberbegriff on Anspruch 15. Hierbei ist das Spülen jedoch schwierig.

Der Erfindung liegt deshalb die Aufgabe zugrunde, dieses Problem zu lösen.

Diese Aufgabe wird durch eine erfindungsgemäße Beschichtungseinrichtung bzw. ein entsprechendes Betriebsverfahren gemäß den unabhängigen Ansprüchen gelöst.

Gemäß der Erfindung ist eine Bypass-Leitung vorgesehen, um die Beschichtungsmittelpumpe zu umgehen. Hierbei ist auch ein Bypass-Ventil vorgesehen, das den Beschichtungsmittelstrom durch die Bypass-Leitung steuert. Die Abführung von Beschichtungsmittel über die Bypass-Leitung ermöglicht ebenfalls eine Kontrolle der Druckverhältnisse an dem Druckkopf und kann auch zum Spülen und Andrücken dienen.

Die Erfindung umfasst die allgemeine technische Lehre, den Beschichtungsmitteldruck und/oder die Durchflussart des Beschichtungsmittels kontrolliert einzustellen, um bei der Applikation von Beschichtungsmittel (z.B. Lack, Kleber, Dichtmittel, Primer, etc.) mit einem Druckkopf definierte Applikationsbedingungen herzustellen, damit qualitativ hochwertige Beschichtungen aufgebracht werden können.

Der im Rahmen der Erfindung verwendete Begriff eines Beschichtungsmittels ist allgemein zu verstehen und umfasst beispielsweise Lacke (z.B. Wasserlack, lösemittelbasierter Lack, Basislack, Klarlack), Wachse (z.B. Konservierungswachs), Dickstoffe, Dichtstoffe, Dämmstoffe und Klebstoffe.

Die erfindungsgemäße Beschichtungseinrichtung weist zunächst in Übereinstimmung mit dem Stand der Technik einen Druckkopf zur Applikation des Beschichtungsmittels (z.B. Lack, Kleber, Dichtmittel, Primer, etc.) auf das Bauteil (z.B. Kraftfahrzeugkarosseriebauteil) auf. Der im Rahmen der Erfindung verwendete Begriff eines Druckkopfs ist allgemein zu verstehen und dient lediglich zur Abgrenzung von Zerstäubern (z.B. Rotationszerstäuber, Scheibenzerstäuber, Airless-Zerstäuber, Airmix-Zerstäuber, Ultraschallzerstäuber), die einen Sprühnebel des zu applizierenden Beschichtungsmittels abgeben. Im Gegensatz dazu gibt der Druckkopf einen räumlich eng begrenzten Beschichtungsmittelstrahl ab. Derartige Druckköpfe sind an sich aus dem Stand der Technik bekannt und beispielsweise in DE 10 2013 092 412 A1, US 9,108,424 B2 und DE 10 2010 019 612 A1 beschrieben.

Darüber hinaus weist die erfindungsgemäße Beschichtungseinrichtung eine Beschichtungsmittelversorgung auf, um den Druckkopf mit dem zu applizierenden Beschichtungsmittel zu versorgen, wobei sich ein bestimmter Beschichtungsmitteldruck und eine bestimmte Durchflussrate des Beschichtungsmittels einstellen.

Die Erfindung sieht nun vorzugsweise vor, dass die Beschichtungsmittelversorgung den Beschichtungsmitteldruck und/oder die Durchflussrate des Beschichtungsmittels kontrolliert einstellt, um definierte Applikationsbedingungen herzustellen, was für die Aufbringung qualitativ hochwertiger Beschichtungen wichtig ist.

In einem Ausführungsbeispiel der Erfindung weist die Beschichtungsmittelversorgung eine Dosierpumpe auf, die das Beschichtungsmittel dosiert und zu dem Druckkopf fördert. Der Begriff einer Dosierpumpe impliziert hierbei, dass die Durchflussrate im Wesentlichen unabhängig ist von Druckverhältnissen am Eingang und am Ausgang der Dosierpumpe. Dies bedeutet, dass entsprechend der Ansteuerung der Dosierpumpe eine definierte Durchflussrate eingestellt werden kann, was für qualitativ hochwertige Beschichtungen wichtig ist.

Beispielsweise kann es sich bei der Dosierpumpe um eine Zahnradpumpe, eine Taumelkolbenpumpe oder eine Mikrozahnradpumpe handeln, um nur einige Beispiele zu nennen.

Hierbei ist es vorteilhaft, wenn die Dosierpumpe mit einem Spülmittel spülbar ist, um Beschichtungsmittelreste aus der Dosierpumpe auszuspülen. Dies ist insbesondere dann vorteilhaft, wenn die Dosierpumpe eingesetzt werden soll, um verschiedene Farben nacheinander zu fördern. Bei einem Farbwechsel kann die Dosierpumpe dann zunächst mit einem Spülmittel gespült werden, um Beschichtungsmittelreste der alten Farbe aus der Dosierpumpe auszuspülen. Alternativ kann die Dosierpumpe zunächst ausgeblasen und dann gespült werden. Weiterhin kann die Dosierpumpe abwechselnd mit Spülmittel und Pulsluft gereinigt werden.

Alternativ besteht im Rahmen der Erfindung die Möglichkeit, dass die Beschichtungsmittelversorgung einen Kolbendosierer aufweist, um das Beschichtungsmittel kontrolliert zuzuführen. Hierbei wird das Beschichtungsmittel von einem verschiebbaren Kolben aus einem Zylinder herausgedrückt, so dass die Kolbenstellung unmittelbar die Menge des applizierten Beschichtungsmittels bestimmt.

Der Kolbendosierer kann beispielsweise am oder in dem Applikator (Druckkopf) angeordnet sein, vor der Roboterhandachse, hinter der Roboterhandachse, an dem distalen Roboterarm ("Arm 2") oder an dem proximalen Roboterarm ("Arm 1"), mitfahrend auf einer linearen Verfahrachse, an der Kabinenwand der Lackierkabine oder außerhalb der Lackierkabine.

Eine andere Erfindungsvariante sieht dagegen einen Kartuschendosierer vor mit einer beschichtungsmittelgefüllten Kartusche mit einem Kartuschenauslass zur Abgabe des Beschichtungsmittels und einem Kartuscheneinlass zur Einleitung eines Verdrängungsfluids, welches das in der Kartusche befindliche Beschichtungsmittel verdrängt und durch den Kartuschenauslass ausstößt. Die Durchflussrate des Beschichtungsmittels an dem Druckkopf kann hierbei durch eine Steuerung des in die Kartusche eingeleiteten Verdrängungsfluids (z.B. zuerst Lösemittel, dann Druckluft) genau gesteuert werden, so dass auch auf diese Weise definierte Applikationsbedingungen eingestellt werden können.

In einer anderen Erfindungsvariante weist die Beschichtungsmittelversorgung ein Beschichtungsmittelreservoir (z.B. Ringleitung) auf, um das zu applizierende Beschichtungsmittel bereit zu stellen, wobei die definierten Applikationsbedingungen durch einen Druckregler eingestellt werden, der den Beschichtungsmitteldruck regelt. Hierbei kann auch ein Drucksensor vorgesehen werden, um den Beschichtungsmitteldruck zu messen, wobei die Messgröße des Beschichtungsmitteldrucks dann dem Druckregler bereitgestellt werden kann.

Gemäß der Erfindung weist die Beschichtungsmittelversorgung eine Beschichtungsmittelpumpe auf, um das Beschichtungsmittel zu dem Druckkopf zu fördern. Bei der Beschichtungsmittelpumpe handelt es sich vorzugsweise um eine Dosierpumpe in dem vorstehend beschriebenen Sinne, jedoch kann in diesem Ausführungsbeispiel auch ein anderer Pumpentyp als Beschichtungsmittelpumpe eingesetzt werden.

Darüber hinaus weist die Beschichtungsmittelversorgung in einem Ausführungsbeispiel einen Drucksensor auf, der den Beschichtungsmitteldruck an dem Druckkopf misst, d.h. stromaufwärts vor dem Druckkopf, innerhalb des Druckkopfs oder unmittelbar an einer Düse des Druckkopfs oder an der Dosierpumpe.

Ferner weist dieses Ausführungsbeispiel im Falle eines Druckreglers auch eine Durchflussmesszelle auf, welche die von der Beschichtungsmittelpumpe zu dem Druckkopf geförderte Durchflussrate misst, insbesondere den Volumenstrom oder den Massenstrom des geförderten Beschichtungsmittels.

Schließlich weist dieses Ausführungsbeispiel noch einen Regler auf, der die Beschichtungsmittelpumpe in Abhängigkeit von dem gemessenen Beschichtungsmitteldruck und/oder in Abhängigkeit von der gemessenen Durchflussrate des Beschichtungsmittels ansteuert.

Weiterhin ist bei diesem Ausführungsbeispiel und erfindungsgemäß eine Bypass-Leitung vorgesehen, um die Beschichtungsmittelpumpe zu umgehen. Hierbei ist auch ein Bypass-Ventil vorgesehen, das den Beschichtungsmittelstrom durch die Bypass-Leitung steuert. Die Abführung von Beschichtungsmittel über die Bypass-Leitung ermöglicht ebenfalls eine Kontrolle der Druckverhältnisse an dem Druckkopf und kann auch zum Spülen und Andrücken dienen. Der bereits vorstehend erwähnte Regler steuert die Beschichtungsmittelpumpe vorzugsweise in Abhängigkeit von dem gemessenen Beschichtungsmitteldruck und/oder in Abhängigkeit von dem gemessenen Beschichtungsmittelstrom, wobei verschiedene Regelungsziele möglich sind. Ein Regelungsziel sieht vor, dass der Beschichtungsmitteldruck auf einen vorgegebenen Soll-Druck geregelt wird. Ein anderes Regelungsziel sieht dagegen vor, dass die Durchflussrate des Beschichtungsmittels auf eine vorgegebene Soll-Durchflussrate geregelt wird. Vorzugsweise ist der Regler deshalb umschaltbar zwischen einem Druckregelbetrieb und einem Mengenstromregelbetrieb. In dem Druckregelbetrieb regelt der Regler den Beschichtungsmitteldruck auf den vorgegebenen Soll-Druck ein. In dem Mengenstromregelbetrieb regelt der Regler dagegen die Durchflussrate des Beschichtungsmittels auf die vorgegebene Soll-Durchflussrate ein.

Die Umschaltung zwischen diesen beiden Betriebsarten (Druckregelbetrieb und Mengenstromregelbetrieb) kann im Rahmen der Erfindung bei diesem Ausführungsbeispiel durch eine Steuereinheit erfolgen. Hierbei ist zu berücksichtigen, dass der Druckkopf teilweise in einem stationären Zustand und teilweise in einem instationären Zustand betrieben wird. Im stationären Zustand (eingeschwungener Betrieb) werden keine Düsen an dem Druckkopf geöffnet oder geschlossen, wobei ein möglichst konstanter Mengenstrom des Beschichtungsmittels appliziert werden soll. Im instationären Zustand des Druckkopfs werden dagegen Düsenventile geschlossen oder geöffnet, was eine entsprechend dynamische Anpassung des applizierten Mengenstroms erfordert. Die Steuereinheit schaltet den Regler dann vorzugsweise in den Mengenstromregelbetrieb, wenn der Druckkopf in einem stationären Zustand betrieben wird, in dem keine Düsenventile des Druckkopfs geöffnet oder geschlossen werden. Die Steuereinheit schaltet den Regler dagegen vorzugsweise in den Druckregelbetrieb, wenn der Druckkopf in einem instationären Zustand betrieben wird, in dem Düsenventile des Druckkopfs dynamisch geöffnet oder geschlossen werden.

Die Steuerung kann die unterschiedlichen Zustände auf Basis des Beschichtungsprogramms zeitlich vorausberechnen, da zu jedem Zeitpunkt des Beschichtungsablaufs bekannt ist, welche Düse geöffnet bzw. geschlossen ist. So kann für jeden beliebigen Zeitpunkt der erforderliche Beschichtungsmittel-Volumenstrom berechnet werden bzw. die Zeitpunkte der Umschaltung vom Volumenregelbetrieb in den Druckregelbetrieb. Dies erhöht die Dynamik der Regelung wesentlich.

Darüber hinaus kann die Steuereinheit auch das vorstehend erwähnte Bypass-Ventil ansteuern und zwar in Abhängigkeit von dem stationären oder instationären Zustand des Druckkopfs.

In einem anderen Ausführungsbeispiel der Erfindung weist die Beschichtungsmittelversorgung eine Beschichtungsmittelzuführung (z.B. Ringleitung), eine Beschichtungsmittelrückführung (z.B. Ringleitung) und ein Druckstellglied (z.B. Steuerventil, Druckregler) auf, das den Beschichtungsmittelstrom von der Beschichtungsmittelzuführung in die Beschichtungsmittelrückführung einstellt. Die Rückführung führt das Beschichtungsmittel vorzugsweise der Wiederverwendung zu, z.B. zurück in die Ringleitung, zum Lackbehälter oder zu einem anderen Applikator. Darüber hinaus weist die Beschichtungsmittelversorgung in diesem Ausführungsbeispiel einen Beschichtungsmittelauslass (z.B. Düse des Druckkopfs) auf, der mit der Beschichtungsmittelzuführung verbunden werden kann oder mit der Beschichtungsmittelzuführung verbunden ist.

Bei diesem Ausführungsbeispiel kann das Druckstellglied - wie bereits vorstehend kurz erwähnt wurde - als Rücklaufdruckregler ausgebildet sein, der den Beschichtungsmittelstrom in die Beschichtungsmittelrückführung einstellt und dadurch den Beschichtungsmitteldruckstrom aufwärts vor dem Rücklaufdruckregler und damit auch an den Beschichtungsmittelauslass auf den vorgegebenen Soll-Druck regelt.

Alternativ besteht - wie bereits vorstehend kurz erwähnt - die Möglichkeit, dass das Druckstellglied ein steuerbares Rücklaufventil ist, das den Beschichtungsmittelstrom in die Beschichtungsmittelrückführung einstellt, um definierte Applikationsverhältnisse an dem Beschichtungsmittelauslass herzustellen. Wie zuvor beschrieben, kann die Steuerung auch die Stellung des Rücklaufventils zeitlich im Voraus berechnen und dadurch die Regeldynamik erhöhen.

In einer besonders vorteilhaften Variante dieses Ausführungsbeispiels ist das Druckstellglied ein doppelt wirkendes Steuerventil, das in Abhängigkeit von seiner Ventilstellung entweder die Beschichtungsmittelzuführung mit dem Beschichtungsmittelauslass verbindet und dabei die Beschichtungsmittelrückführung verschließt, oder die Beschichtungsmittelzuführung mit der Beschichtungsmittelrückführung verbindet und dabei den Beschichtungsmittelauslass verschließt. Der zugeführte Beschichtungsmittelstrom wird also von dem Druckstellglied entweder in die Beschichtungsmittelrückführung oder durch den Beschichtungsmittelauslass geleitet, so dass der geförderte Beschichtungsmittelstrom mengenmäßig konstant bleiben kann und nur die Richtung des Beschichtungsmittelstroms verändert wird, nämlich entweder in die Beschichtungsmittelrückführung oder durch den Beschichtungsmittelauslass. Beispielsweise kann dann das doppelt wirkende Steuerventil ein hantelförmiges oder wippenförmiges Ventilelement aufweisen.

Vorzugsweise ist dieses doppelt wirkende Steuerventil in dem Druckkopf angeordnet. Es besteht jedoch im Rahmen der Erfindung auch die Möglichkeit, dass das doppelt wirkende Steuerventil stromaufwärts vor dem Druckkopf angeordnet ist.

Weiterhin ist zu erwähnen, dass der von dem doppelt wirkenden Steuerventil gesteuerte Beschichtungsmittelauslass vorzugsweise eine Düsenöffnung des Druckkopfs ist. In diesem Fall ist das doppelt wirkende Steuerventil also unmittelbar an der Düsenöffnung angeordnet.

Ferner ist zu erwähnen, dass das doppelt wirkende Steuerventil zu der Beschichtungsmittelrückführung hin und zu dem Beschichtungsmittelauslass hin den gleichen freien Strömungsquerschnitt aufweist, was in beiden Ventilstellungen zu demselben Strömungswiderstand führt.

Erfindungsgemäß weist die Beschichtungsmittelversorgung zur Förderung des Beschichtungsmittels eine Beschichtungsmittelpumpe mit einer einstellbaren Förderleistung auf, insbesondere eine Dosierpumpe. Hierbei hat der Düsenkopf mehrere Beschichtungsmitteldüsen zur Abgabe des Beschichtungsmittels, wobei den einzelnen Beschichtungsmitteldüsen jeweils ein Düsenventil zugeordnet ist, so dass die einzelnen Beschichtungsmitteldüsen individuell angesteuert werden können. Darüber hinaus ist eine Kontrolleinheit vorgesehen zur Einstellung der Förderleistung der Beschichtungsmittelpumpe, wobei die Kontrolleinheit die Anzahl der geöffneten Düsenventile ermittelt und in Abhängigkeit von der Anzahl der geöffneten Düsenventile die Förderleistung der Beschichtungsmittelpumpe einstellt. Die Kontrolleinheit kann die Anzahl der geöffneten Düsenventile beispielsweise durch Abfrage der Steuersignale für die einzelnen Düsenventile ermitteln oder wie vorstehend beschrieben wurde. Die Förderleistung der Beschichtungsmittelpumpe wird dann entsprechend der benötigten Fördermenge in Abhängigkeit von der Anzahl der geöffneten Düsenventile eingestellt. Hierbei ist zu erwähnen, dass die Kontrolleinheit vorzugsweise eine sehr geringe Reaktionszeit von weniger als 100ms, 60ms, 10ms, 1ms, 100ps oder sogar weniger als 10µs hat, um auf das dynamische Öffnen und Schließen der einzelnen Düsenventile hinreichend schnell reagieren zu können.

Eine andere Möglichkeit zur Kontrolle der Applikationsbedingungen an dem Druckkopf besteht darin, einen Pufferspeicher vorzusehen, der das Beschichtungsmittel aufnimmt und Druckschwankungen des Beschichtungsmittels abpuffert.

Der Pufferspeicher ist vorzugsweise unmittelbar in dem Druckkopf angeordnet, um dort Druckschwankungen möglichst effektiv abzupuffern. Es besteht jedoch alternativ auch die Möglichkeit, dass der Pufferspeicher außerhalb des Druckkopfs und stromaufwärts vor dem Druckkopf angeordnet ist.

Beispielsweise kann der Pufferspeicher durch einen Zylinder mit einem verschiebbaren Kolben realisiert werden, wobei der Kolben beispielsweise durch eine Feder, Druckluft, einem elektrischen Aktor, einem piezoelektrischen Aktor oder einem magnetischen Aktor vorgespannt werden kann.

Weiterhin ist zu erwähnen, dass der Druckkopf vorzugsweise durch einen Manipulator (z.B. Lackierroboter) mit einer seriellen Roboterkinematik entlang einer programmierten Bewegungsbahn mit einer bestimmten Ziehgeschwindigkeit über die Oberfläche des zu beschichtenden Bauteils bewegt wird. Beim Überfahren einer Bauteilkante müssen die einzelnen Beschichtungsmitteldüsen des Druckkopfs dann nacheinander geschlossen bzw. geöffnet werden, was auch eine entsprechend dynamische Anpassung der Förderleistung der Beschichtungsmittelpumpe erforderlich macht. Hierzu ist zu berücksichtigen, dass die erforderliche Reaktionszeit der Beschichtungsmittelpumpe von der Ziehgeschwindigkeit des Druckkopfs und von dem Abstand der benachbarten Beschichtungsmitteldüsen entlang der programmierten Bewegungsbahn abhängig ist. Die Beschichtungsmittelpumpe weist deshalb vorzugsweise eine ausreichend kurze Zeitkonstante auf, wobei die Zeitkonstante der Beschichtungsmittelpumpe die Zeitspanne angibt, die bei einer Änderung der gewünschten Fördermenge vergeht, bis 63,2% (1-1/e) der gewünschten Änderung der Fördermenge umgesetzt ist. Es gilt deshalb vorzugsweise folgende Formel:

$$s > v \cdot \tau$$

mit:

s: Abstand der benachbarten Beschichtungsmitteldüsen in dem Druckkopf entlang der programmierten Bewegungsbahn,

v: Ziehgeschwindigkeit des Druckkopfs entlang der programmierten Roboterbahn,

$\tau$: Zeitkonstante der Beschichtungsmittelpumpe.

Allerdings ist zu berücksichtigen, dass der Abstand der benachbarten Beschichtungsmitteldüsen entlang der programmierten Bewegungsbahn auch durch eine Verdrehung des Druckkopfs beeinflusst werden kann. So sind die Beschichtungsmitteldüsen üblicherweise entlang einer Düsenlinie in dem Druckkopf angeordnet, wobei der Druckkopf mit der Düsenlinie relativ zu der programmierten Bewegungsbahn drehbar ist, so dass die Düsenlinie mit der programmierten Bewegungsbahn einen Druckkopfwinkel einschließt. Der Druckkopf wird dann vorzugsweise so gedreht und bewegt, dass folgende Formel gilt:

$$v \cdot \tau < s = d \cdot \cos \alpha$$

mit:

s: Abstand der benachbarten Beschichtungsmitteldüsen in dem Druckkopf entlang der programmierten Bewegungsbahn,

d: Abstand der benachbarten Beschichtungsmitteldüsen entlang der Düsenlinie,

v: Ziehgeschwindigkeit des Druckkopfs entlang der programmierten Roboterbahn,

$\tau$: Zeitkonstante der Beschichtungsmittelpumpe,

$\alpha$: Drehwinkel zwischen der Düsenlinie und der programmierten Bewegungsbahn des Druckkopfs.

Allgemein ist zu erwähnen, dass der Druckkopf einen eng begrenzten Beschichtungsmittelstrahl abgibt im Gegensatz zu einem Sprühnebel, wie es beispielsweise bei Rotationszerstäubern der Fall ist.

Beispielsweise kann der Druckkopf einen Tröpfchenstrahl oder auch nur einzelne Tropfen abgeben im Gegensatz zu einem in Strahllängsrichtung zusammenhängenden Beschichtungsmittelstrahl.

Alternativ besteht jedoch auch die Möglichkeit, dass der Druckkopf einen in Strahllängsrichtung zusammenhängenden Beschichtungsmittelstrahl abgibt im Gegensatz zu dem vorstehenden erwähnten Tröpfchenstrahl.

Die erfindungsgemäße Kontrolle des Beschichtungsmitteldrucks erfolgt vorzugsweise mit einer maximalen Schwankungsbreite von höchstens ±500mbar, ±200mbar, ±100mbar oder sogar höchstens ±50mbar.

Ferner ist zu erwähnen, dass der Druckkopf vorzugsweise einen Auftragswirkungsgrad von mindestens 80%, 90%, 95% oder sogar 99% aufweist, so dass im Wesentlichen das gesamte applizierte Beschichtungsmittel vollständig auf dem Bauteil abgelagert wird, ohne dass Overspray entsteht.

Der Druckkopf ermöglicht vorzugsweise eine Flächenbeschichtungsleistung von mindestens 0,5 m$^2$/min, 1m$^2$/min, 2m$^2$/min oder mindestens 3m$^2$/min, d.h. der Druckkopf kann eine entsprechende Bauteiloberfläche innerhalb der genannten Zeitspanne beschichten.

Darüber hinaus ist zu erwähnen, dass der Mengenstrom des applizierten Beschichtungsmittels und damit die Austrittsgeschwindigkeit des Beschichtungsmittels vorzugsweise so eingestellt wird, dass das Beschichtungsmittel nach dem Auftreffen auf das Bauteil nicht von dem Bauteil abprallt.

Beispielsweise kann die Austrittsgeschwindigkeit des Beschichtungsmittels im Bereich von 5m/s bis 30 m/s liegen.

Der Applikationsabstand zwischen Düse und Bauteiloberfläche kann beispielsweise im Bereich von 4mm bis 200mm, insbesondere von 5mm bis 100mm, 5mm bis 50mm, 10mm bis40mm liegen.

Auch hinsichtlich des applizierten Beschichtungsmittels bestehen im Rahmen der Erfindung verschiedene Möglichkeiten. Vorzugsweise handelt es sich bei dem Beschichtungsmittel jedoch um einen Lack, wie beispielsweise einem Basislack, einem Klarlack, einem Effektlack, einem Mica-Lack oder einem Metallic-Lack. Beispielsweise können diese Lacke wasserbasierende oder lösemittel-basierende Lacke sein.

Zum Ausstoßen des zu applizierenden Beschichtungsmittels weist der Druckkopf vorzugsweise mindestens einen elektrisch ansteuerbaren Aktor auf, beispielsweise einen Magnetaktor oder einen Piezoaktor. Pneumatische Ventile oder Antriebe sind auch denkbar.

Schließlich ist noch zu erwähnen, dass die Erfindung auch ein entsprechendes Betriebsverfahren umfasst, wobei die einzelnen Schritte des erfindungsgemäßen Betriebsverfahrens bereits aus der vorstehenden Beschreibung der erfindungsgemäßen Beschichtungseinrichtung ersichtlich sind und deshalb nicht näher beschrieben werden müssen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

Figur 1A   eine schematische Darstellung eines doppelt wirkenden Steuerventils zur Steuerung des Lackstroms durch eine Düse des Druckkopfs in einer Öffnungsstellung,

Figur 1B   das doppelt wirkende Steuerventil gemäß Figur 1A in einer Schließstellung,

Figur 2   eine schematische Darstellung einer nicht erfindungsgemäßen Beschichtungseinrichtung mit einem Steuerventil zur Rückführung von Beschichtungsmittel von dem Druckkopf, wobei das Steuerventil in Abhängigkeit von dem Druck an dem Druckkopf gesteuert wird,

Figur 3   eine nicht erfindungsgemäße Abwandlung von Figur 2, wobei das Steuerventil in Abhängigkeit von den Ventilen in dem Druckkopf angesteuert wird,

Figur 4   ein Ausführungsbeispiel mit einer Durchflussmesszelle und einem Drucksensor,

Figur 5   eine nicht erfindungsgemäße Variante mit einem Farbwechsler,

Figur 6   eine nicht erfindungsgemäße Abwandlung der Varianten gemäß den Figuren 2 und 3 mit einem Rücklaufdruckregler,

Figur 7    eine nicht erfindungsgemäße Abwandlung von Figur 6 mit einer zusätzlichen Kontrolleinheit zur Steuerung der Dosierpumpe,

Figur 8    eine nicht erfindungsgemäße Abwandlung von Figur 6 mit einem zusätzlichen Pufferspeicher in dem Druckkopf,

Figur 9    eine schematische Darstellung zur Verdeutlichung der Verdrehung des Druckkopfs während der Bewegung, sowie

Figur 10    ein Druckdiagramm zur Verdeutlichung des Ansprechverhaltens der Beschichtungsmittelpumpe.

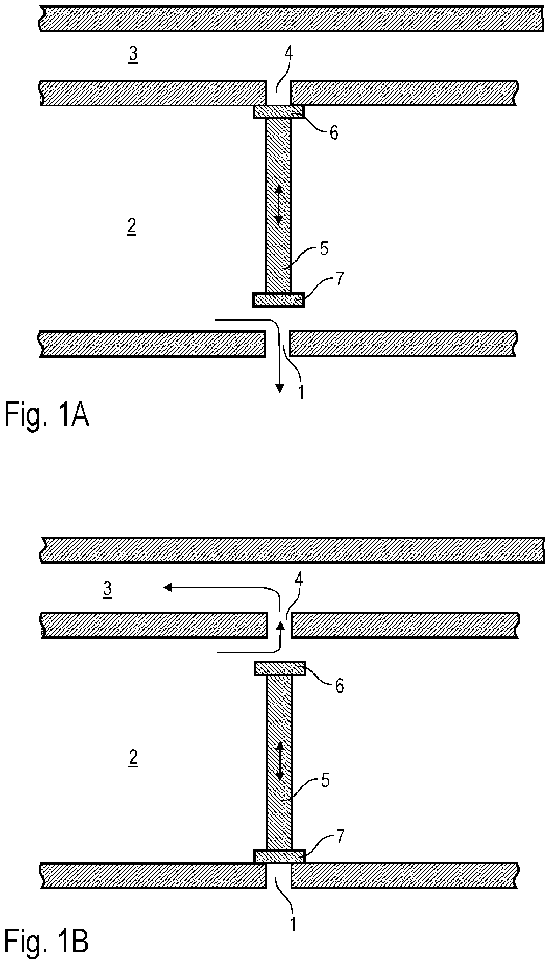

Im Folgenden werden zunächst die Figuren 1A und 1B erläutert, die ein doppelt wirkendes Düsenventil in einem Düsenkopf einer erfindungsgemäßen Beschichtungseinrichtung zeigen, wobei das Düsenventil den Beschichtungsmittelstrom durch eine Düse 1 in dem Druckkopf entweder freigibt (Fig. 1A) oder versperrt (Fig. 1B).

Das zu applizierende Beschichtungsmittel wird in dem Druckkopf über eine Beschichtungsmittelzuführung 2 zugeführt und kann den Düsenkopf in Abhängigkeit von der Stellung des Düsenventils entweder über die Düse 1 verlassen oder in eine Beschichtungsmittelrückführung 3 zurückgeführt werden, wobei der Strömungsweg von der Beschichtungsmittelzuführung 2 in die Beschichtungsmittelrückführung 3 durch eine Rückführöffnung 4 führt, die von dem Steuerventil entweder freigegeben (Fig. 1B) oder versperrt wird (Fig. 1A).

Das Steuerventil ist hierbei nur schematisch dargestellt und weist eine Ventilnadel 5 auf, die von einem nicht dargestellten Aktor (z.B. Magnetaktor) in Richtung des Doppelpfeils verschoben werden kann.

An den beiden gegenüberliegenden Enden der Ventilnadel 5 ist jeweils eine Dichtung 6, 7 angebracht, um die Düse 1 bzw. die Rückführöffnung 4 verschließen zu können.

In der in Figur 1A dargestellten Ventilstellung verschließt das Steuerventil mit der Dichtung 6 die Rückführöffnung 4, so dass kein Beschichtungsmittel von der Beschichtungsmittelzuführung 2 in die Beschichtungsmittelrückführung 3 strömen kann.

Stattdessen gibt das Steuerventil die Düse 1 frei, so dass Beschichtungsmittel aus der Beschichtungsmittelzuführung 2 durch die Düse 1 austreten kann.

In der in Figur 1B dargestellten Ventilstellung gibt das Steuerventil mit der Dichtung 6 dagegen die Rückführöffnung 4 frei, so dass Beschichtungsmittel aus der Beschichtungsmittelzuführung 2 in die Beschichtungsmittelrückführung 3 strömen kann.

In dieser Ventilstellung verschließt das Steuerventil dagegen mit der Dichtung 7 die Düse 1, so dass kein Beschichtungsmittel aus der Düse 1 austreten kann.

Das Steuerventil ist also doppelt wirkend, da das Steuerventil nicht nur den Beschichtungsmittelstrom durch die Düse 1 steuert, sondern auch den Beschichtungsmittelstrom aus der Beschichtungsmittelzuführung 2 in die Beschichtungsmittelrückführung 3.

Hierbei ist zu erwähnen, dass die Rückführöffnung 4 im Wesentlichen den gleichen freien Strömungsquerschnitt wie die Düse 1 hat und damit auch denselben Strömungswiderstand aufweist. Dies hat zur Folge, dass der Beschichtungsmittelstrom durch die Beschichtungsmittelzuführung 2 von der Stellung des Steuerventils nicht beeinflusst wird, da der zugeführte Beschichtungsmittelstrom ohne Änderung des Strömungswiderstands entweder durch die Rückführöffnung 4 oder durch die Düse 1 abgeleitet wird. Dies ist vorteilhaft, weil eine Umschaltung des Steuerventils dann nicht zu unerwünschten Druckstößen führt, welche die Beschichtungsqualität beeinträchtigen könnten. Die Rückführung muss einen ähnlichen Staudruck erzeugen oder fast drucklos sein, damit die Strömungsverhältnisse gleich bleiben.

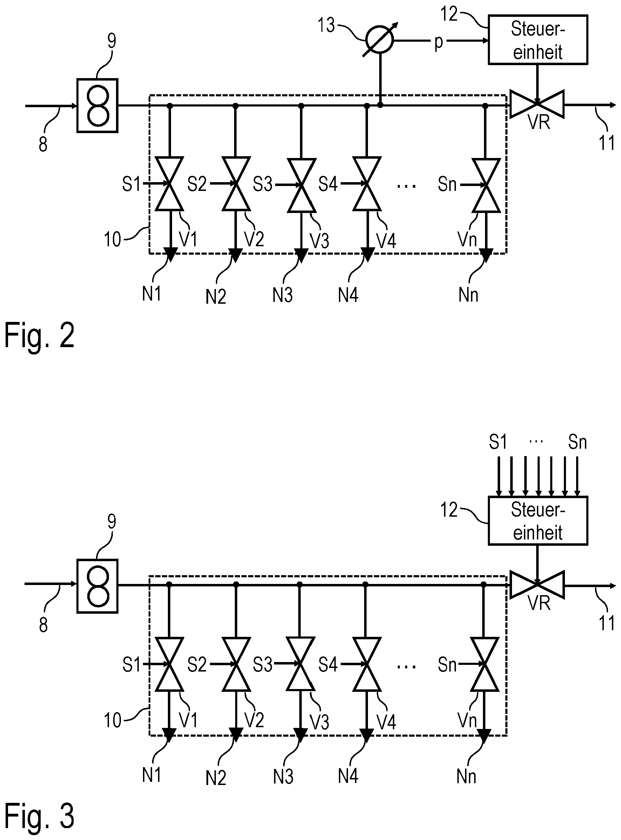

Figur 2 zeigt eine schematische Darstellung einer nicht erfindungsgemäßen Beschichtungseinrichtung mit einer Beschichtungsmittelzuführung 8, die beispielsweise an eine Ringleitung angeschlossen werden kann und eine Dosierpumpe 9 mit dem zu applizierenden Beschichtungsmittel versorgt. Die Dosierpumpe 9 fördert das zu applizierende Beschichtungsmittel mit einer definierten Durchflussrate zu einem Druckkopf 10 mit zahlreichen Düsen N1, N2, N3, N4, ..., Nn, wobei den Düsen N1-Nn jeweils ein Steuerventil V1-Vn zugeordnet ist, um den Beschichtungsmittelstrom durch die jeweilige Düse N1-Nn zu steuern.

Die Steuerventile V1-Vn werden jeweils durch Steuersignale Sl-Sn individuell angesteuert, wobei die Erzeugung der Steuersignale Sl-Sn hier zur Vereinfachung nicht dargestellt ist.

Darüber hinaus weist die dargestellte Beschichtungseinrichtung eine Beschichtungsmittelrückführung 11 auf, um nicht benötigtes Beschichtungsmittel zirkulieren zu lassen oder in eine Rückführung abzuleiten.

Der Beschichtungsmittelstrom durch die Beschichtungsmittelrückführung wird hierbei durch ein Rückführventil VR eingestellt, wobei das Rückführventil VR von einer Steuereinheit 12 angesteuert wird.

Darüber hinaus weist die dargestellte Beschichtungseinrichtung einen Drucksensor 13 auf, der den Beschichtungsmitteldruck in dem Druckkopf 10 misst, d.h. unmittelbar vor den Düsen N1-Nn.

Der Drucksensor 13 ist ausgangsseitig mit der Steuereinheit 12 verbunden, die in Abhängigkeit von dem gemessenen Druck das Rückführventil VR ansteuert. Das Ziel der Ansteuerung des Rückführventils VR durch die Steuereinheit 12 ist hierbei die Einstellung eines möglichst konstanten Beschichtungsmitteldrucks in dem Druckkopf 10 und zwar unabhängig von der Ventilstellung der Steuerventile V1-Vn. So führt ein Öffnen der Steuerventile V1-Vn zu einem größeren Beschichtungsmittelstrom durch die jeweiligen Düsen N1-Nn, was ohne Gegenmaßnahmen zunächst zu einem unerwünschten Druckabfall des Beschichtungsmitteldrucks in dem Druckkopf 10 führt. Dem kann die Steuereinheit 12 entgegenwirken, indem das Rückführventil VR entsprechend geschlossen wird, so dass weniger Beschichtungsmittel über die Beschichtungsmittelrückführung 11 abgeleitet wird. Der verringerte Beschichtungsmittelstrom in die Beschichtungsmittelrückführung 11 kompensiert dann nach Möglichkeit den vermehrten Beschichtungsmittelstrom durch die geöffneten Steuerventile V1-Vn. Im Idealfall erfolgt diese Kompensation so, dass der Beschichtungsmittelstrom in den Druckkopf 10 unabhängig von der Ventilstellung der Steuerventile V1-Vn konstant bleibt, was auch zu einem konstanten Beschichtungsmitteldruck in dem Druckkopf 10 führt. Diese Kompensation führt also zu einem konstanten Beschichtungsmitteldruck auch beim dynamischen Öffnen bzw. Schließen der Steuerventile V1-Vn und trägt damit zu einem guten Beschichtungsergebnis bei.

Die nicht erfindungsgemäße Variante gemäß Figur 3 stimmt weitgehend mit der vorstehend beschriebenen und in Figur 2 dargestellten nicht erfindungsgemäße Variante überein, so dass zur Vermeidung von Wiederholungen auf die vorstehende Beschreibung verwiesen wird, wobei für entsprechende Einzelheiten dieselben Bezugszeichen verwendet werden.

Ein Unterschied dieser Variante gegenüber der Variante gemäß Figur 2 besteht darin, dass die Steuereinheit 12 nicht mit dem Drucksensor 13 verbunden ist, sondern die Steuersignale SI-Sn zur Ansteuerung der Steuerventile V1-Vn als Eingangssignale erhält. Die Steuereinheit 12 wird hierbei also über ein dynamisches Öffnen bzw. Schließen der Steuerventile SI-Sn unterrichtet und kann darauf mit einem entsprechenden Schließen bzw. Öffnen des Rückführventils VR reagieren, um einen vermehrten bzw. verminderten Beschichtungsmittelstrom durch die Düsen N1-Nn durch ein entsprechendes Öffnen bzw. Schließen des Rückführventils VR kompensieren zu können, damit der Beschichtungsmitteldruck in dem Druckkopf 10 möglichst konstant gehalten wird.

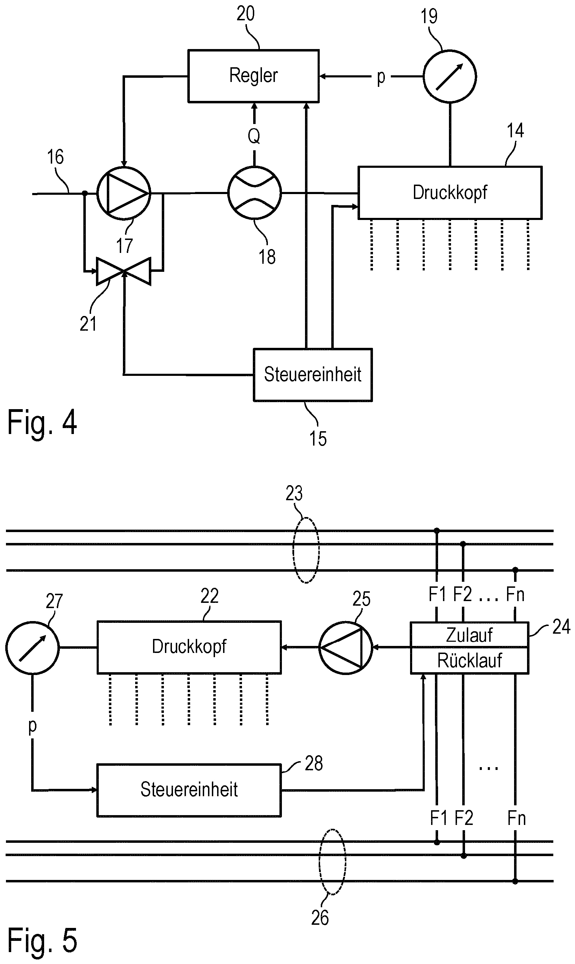

Figur 4 zeigt ein Ausführungsbeispiel einer erfindungsgemäßen Beschichtungseinrichtung mit einem Druckkopf 14 mit zahlreichen Steuerventilen, die von einer Steuereinheit 15 angesteuert werden.

Das zu applizierende Beschichtungsmittel wird dem Druckkopf 14 hierbei über eine Beschichtungsmittelzuführung 16, eine Dosierpumpe 17 und eine Durchflussmesszelle 18 zugeführt, wobei die Durchflussmesszelle 18 die Durchflussrate Q des Beschichtungsmittels misst.

Darüber hinaus weist die Beschichtungseinrichtung noch einen Drucksensor 19 auf, der den Beschichtungsmitteldruck p in dem Druckkopf 14 misst.

Der Drucksensor 19 und die Durchflussmesszelle 18 sind ausgangsseitig mit einem Regler 20 verbunden, der die Dosierpumpe 17 ansteuert.

Darüber hinaus ist noch ein Bypass-Ventil 21 vorgesehen, das von der Steuereinheit 15 angesteuert wird.

Im Betrieb dieser Beschichtungseinrichtung ist zu unterscheiden zwischen einem stationären Zustand und einem instationären Zustand.

Im stationären Zustand werden keine Steuerventile in dem Druckkopf 14 dynamisch geöffnet oder geschlossen, so dass sich das System im eingeschwungenen Zustand befindet.

Im instationären Zustand werden dagegen Steuerventile in dem Druckkopf 14 dynamisch geschlossen bzw. geöffnet, so dass sich das System nicht im eingeschwungenen Zustand befindet. In Abhängigkeit von diesen beiden Zuständen wird der Regler 20 dann entweder in einem Mengenstromregelbetrieb oder in einem Druckregelbetrieb betrieben.

Im Druckregelbetrieb steuert der Regler 20 die Dosierpumpe 17 so an, dass am Eingang des Druckkopfs 14 ein möglichst konstanter Beschichtungsmitteldruck p bereitgestellt wird.

Im Mengenstromregelbetrieb steuert der Regler 20 die Dosierpumpe 17 dagegen so an, dass eine möglichst konstante Durchflussrate Q des Beschichtungsmittels eingestellt wird.

Die Steuereinheit 15 schaltet den Regler 20 zwischen dem Druckregelbetrieb und dem Mengenstromregelbetrieb um und zwar so, dass im instationären Zustand in den Druckregelbetrieb geschaltet wird, wohingegen im stationären Zustand in den Mengenstromregelbetrieb geschaltet wird.

Figur 5 zeigt eine weitere Variante einer nicht erfindungsgemäßen Beschichtungseinrichtung mit einem Druckkopf 22 als Applikationsgerät.

Der Druckkopf 22 wird hierbei über eine Ringleitungsanordnung 23 mit mehreren Leitungen für verschiedene Farben F1, F2, ..., Fn mit dem zu beschichtenden Lack versorgt. Die Auswahl der gewünschten Farbe F1-Fn erfolgt durch einen Farbwechsler 24 aus der Ringleitungsanordnung 23, wobei der Farbwechsler 24 die ausgewählte Farbe einer Dosierpumpe 25 zuführt, welche den ausgewählten Lack mit einer definierten Durchflussrate zu dem Druckkopf 22 leitet.

Darüber hinaus ist der Farbwechsler 24 mit einer Ringleitungsanordnung 26 verbunden, die eine Beschichtungsmittelrückführung bildet.

Der Farbwechsler 24 hat hierbei also nicht nur die Funktion, den gewünschten Lack F1-Fn aus der Ringleitungsanordnung 23 auszuwählen und der Dosierpumpe 25 und damit auch dem Druckkopf 22 zuzuführen. Vielmehr hat der Farbwechsler 24 auch die Aufgabe, überschüssigen Lack in Abhängigkeit von der Ventilstellung der Steuerventile in dem Druckkopf 22 in die Ringleitungsanordnung 26 zurückzuführen, um Druckschwankungen in den Druckkopf 22 möglichst zu verhindern oder wenn kein Lack einer bestimmten Farbe benötigt wird.

Darüber hinaus weist die Beschichtungseinrichtung einen Drucksensor 27 auf, der den Lackdruck in dem Druckkopf 22 oder an der Dosierpumpe misst und ausgangsseitig mit einer Steuereinheit 28 verbunden ist.

Die Steuereinheit 28 steuert den Farbwechsler 24 nun so an, dass Druckschwankungen in dem Druckkopf 22 möglichst vermieden werden. Hierzu öffnet bzw. schließt die Steuereinheit 28 die Rückführung in die Ringleitungsanordnung 26, um eine dynamische Zunahme bzw. Abnahme des applizierten Beschichtungsmittelstroms zu kompensieren. Die Steuereinheit 28 sorgt dadurch für kontrollierte Druckverhältnisse in dem Druckkopf 22, was zu einem guten Beschichtungsergebnis beiträgt.

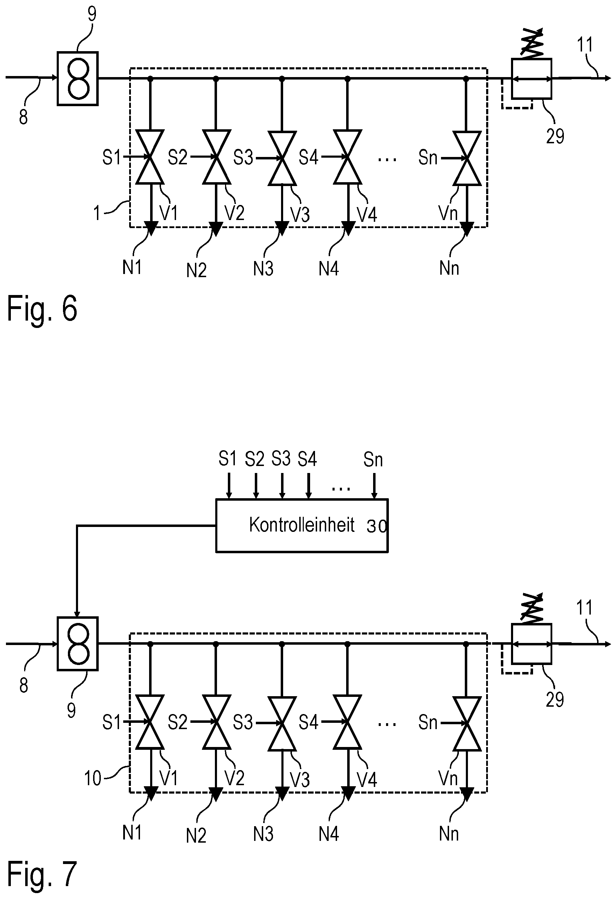

Figur 6 zeigt eine nicht erfindungsgemäße Abwandlung von Figur 2, so dass zur Vermeidung von Wiederholungen zunächst auf die vorstehende Beschreibung zu Figur 2 verwiesen wird, wobei für entsprechende Einzelheiten dieselben Bezugszeichen verwendet werden.

Eine Besonderheit dieser Variante besteht darin, dass anstelle des Rückführventils VR ein Rücklaufdruckregler 29 den Beschichtungsmittelstrom in die Beschichtungsmittelrückführung 11 steuert. Der Rücklaufdruckregler 29 ("back pressure regulator") regelt den Beschichtungsmitteldruck stromaufwärts vor dem Rücklaufdruckregler 29 und damit innerhalb des Druckkopfs 10 auf einen vorgegebenen Soll-Druck. Der Rücklaufregler 29 kann hierbei eine Zunahme bzw. eine Abnahme des applizierten Beschichtungsmittelstroms kompensieren, wenn die Steuerventile V1-Vn dynamisch geöffnet bzw. geschlossen werden. Dadurch sorgt der Rücklaufdruckregler 29 für einen im Wesentlichen konstanten Beschichtungsmitteldruck in dem Druckkopf 10.

Figur 7 zeigt eine nicht erfindungsgemäße Abwandlung der Variante gemäß Figur 6, so dass zur Vermeidung von Wiederholungen zunächst auf die vorstehende Beschreibung verwiesen wird, wobei für entsprechende Einzelheiten dieselben Bezugszeichen verwendet werden.

Eine Besonderheit dieser Variante besteht darin, dass eine Kontrolleinheit 30 die Dosierpumpe 9 in Abhängigkeit von den Steuersignalen SI-Sn für die Steuerventile V1-Vn des Druckkopfs 10 ansteuert.

Falls beispielsweise eines oder mehrere der Steuerventile V1-Vn dynamisch geschlossen werden, so kann die Kontrolleinheit 30 die Fördermenge der Dosierpumpe 9 herunterregeln, um ein Überschießen des Beschichtungsmitteldrucks in dem Druckkopf 10 zu vermeiden. In dieser Variante trägt also nicht nur der Rücklaufdruckregler 29 zur Erreichung der gewünschten Druckverhältnisse in dem Druckkopf 10 bei, sondern auch die Steuerung der Dosierpumpe 9 durch die Kontrolleinheit 30.

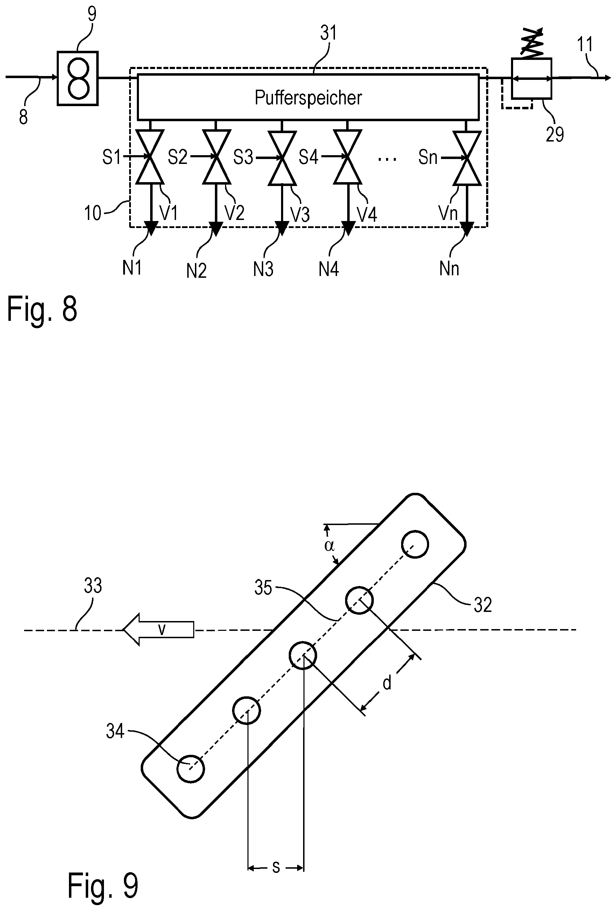

Figur 8 zeigt eine nicht erfindungsgemäße Abwandlung der Variante gemäß Figur 6, so dass zur Vermeidung von Wiederholungen zunächst auf die vorstehende Beschreibung verwiesen wird, wobei für entsprechende Einzelheiten dieselben Bezugszeichen verwendet werden.

Eine Besonderheit dieser Variante besteht darin, dass der Druckkopf 10 einen integrierten Pufferspeicher 31 enthält, der Druckschwankungen in dem Druckkopf 10 abpuffert. Beispielsweise kann der Pufferspeicher 31 einen Zylinder mit einem verschiebbaren Kolben aufweisen, wobei der Kolben beispielsweise durch eine Feder oder durch Druckluft vorgespannt werden kann.

Der Pufferspeicher 31 trägt aufgrund seiner Pufferwirkung ebenfalls dazu bei, dass auch bei einem dynamischen Öffnen bzw. Schließen der Steuerventile V1-Vn in dem Druckkopf 10 keine wesentlichen Druckschwankungen auftreten, da diese von dem Pufferspeicher 31 abgepuffert werden.

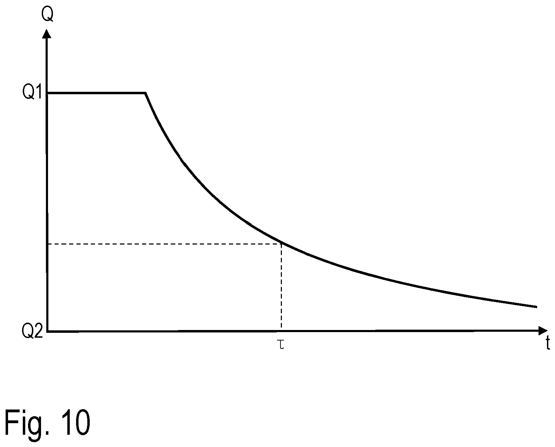

Im Folgenden werden nun die Figuren 9 und 10 beschrieben. So zeigt Figur 9 in stark vereinfachter Darstellung die Bewegung eines Druckkopfs 32 entlang einer programmierten Bewegungsbahn 33 über eine Bauteiloberfläche, wobei der Druckkopf 32 von einem mehrachsigen Lackierrobotereiner mit einer seriellen Roboterkinematik oder von einer Maschine oder einer Lineareinheit mit einer Ziehgeschwindigkeit v über die Bauteiloberfläche bewegt wird.

In dem Druckkopf 32 sind hierbei - stark vereinfacht dargestellt - mehrere Düsen 34 entlang einer Düsenlinie 35 nebeneinander angeordnet. Die Düsen 34 sind hierbei entlang der Düsenlinie 35 in einem Abstand d zueinander angeordnet.

Der Düsenkopf 32 kann von dem mehrachsigen Lackierroboter jedoch gedreht werden, wobei der Düsenkopf 32 mit der Düsenlinie 35 einen Winkel $\alpha$ relativ zu der programmierten Bewegungsbahn 33 einschließt. In Abhängigkeit von dem Drehwinkel $\alpha$ des Druckkopfs 32 stellt sich dann ein bestimmter Abstand s der benachbarten Düsen 34 entlang der programmierten Bewegungsbahn 33 ein.

Der vorstehend beschriebene Sachverhalt ist wichtig, da die Düsen 34 in dem Druckkopf 32 beim Auflaufen des Druckkopfs 32 an die Grenze eines zu lackierenden Bereichs nacheinander geschlossen werden müssen. Falls der Druckkopf 32 entlang der programmierten Bewegungsbahn 33 also das Ende eines zu lackierenden Bereichs erreicht, so müssen in dem Druckkopf 32 die Düsen 34 der Reihe nach von vorne nach hinten geschlossen werden.

Dieses Schließen der Düsen 34 führt zu einer dynamischen Verringerung des applizierten Beschichtungsmittelstroms, so dass die zugehörige Beschichtungsmittelpumpe entsprechend heruntergefahren werden sollte, um eine überschüssige Beschichtungsmittelförderung und einen damit verbundenen überschießenden Beschichtungsmitteldruck zu vermeiden. Allerdings hat eine Beschichtungsmittelpumpe üblicherweise eine bestimmte Trägheit und kann auf eine Änderung der gewünschten Fördermenge nicht sofort reagieren, sondern nur mit einer bestimmten Verzögerung, wie in Figur 10 dargestellt ist. So zeigt Figur 10 die Änderung der gewünschten Fördermenge von einem Soll-Wert Q1 auf einen geringeren Soll-Wert Q2. Daraus ist ersichtlich, dass die gewünschte Änderung der Fördermenge mit einer bestimmten Zeitkonstanten $\tau$ umgesetzt wird.

Die Beschichtungsmittelpumpe sollte nun nach Möglichkeit so schnell reagieren können, dass die Beschichtungsmittelpumpe mit ihrem Förderstrom dem dynamischen Öffnen bzw. Schließen der Düsen 34 des Düsenkopfs 32 folgen kann. Die Beschichtungseinrichtung sollte deshalb folgende Formel erfüllen:

$$v \cdot \tau < s = d \cdot \cos \alpha$$

mit:

s: Abstand der benachbarten Beschichtungsmitteldüsen in dem Druckkopf entlang der programmierten Bewegungsbahn,

d: Abstand der benachbarten Beschichtungsmitteldüsen entlang der Düsenlinie,

v: Ziehgeschwindigkeit des Druckkopfs entlang der programmierten Roboterbahn,

$\tau$: Zeitkonstante der Beschichtungsmittelpumpe,

$\alpha$: Drehwinkel zwischen der Düsenlinie und der programmierten Bewegungsbahn des Druckkopfs.

Bei einer Erfüllung dieser Formel kann die Beschichtungsmittelpumpe die geförderte Beschichtungsmittelmenge nämlich dem dynamischen Öffnen bzw. Schließen der Düsen 34 annähernd nachführen.

Bezugszeichenliste

| | |
|---|---|
| 1 | Düse |
| 2 | Beschichtungsmittelzuführung |
| 3 | Beschichtungsmittelrückführung |
| 4 | Rückführöffnung |
| 5 | Ventilnadel |
| 6 | Dichtung |
| 7 | Dichtung |
| 8 | Beschichtungsmittelzuführung |
| 9 | Dosierpumpe |
| 10 | Druckkopf |
| 11 | Beschichtungsmittelrückführung |
| 12 | Steuereinheit |
| 13 | Drucksensor |
| 14 | Druckkopf |
| 15 | Steuerventile |
| 16 | Beschichtungsmittelzuführung |
| 17 | Dosierpumpe |
| 18 | Durchflussmesszelle |
| 19 | Drucksensor |
| 20 | Regler |
| 21 | Bypass-Ventil |
| 22 | Druckkopf |
| 23 | Ringleitungsanordnung |
| 24 | Farbwechsler |
| 25 | Dosierpumpe |
| 26 | Ringleitungsanordnung |
| 27 | Drucksensor |

| | |
|---|---|
| 28 | Steuereinheit |
| 29 | Rücklaufdruckregler |
| 30 | Kontrolleinheit |
| 31 | Pufferspeicher |
| 32 | Druckkopf |
| 33 | Programmierte Bewegungsbahn |
| 34 | Düsen in dem Druckkopf |
| 35 | Düsenlinie |
| $\alpha$ | Drehwinkel des Druckkopfs relativ zu der Bewegungsbahn |
| d | Abstand der Düsen entlang der Düsenlinie |
| F1-Fn | Farben |
| N1-Nn | Düsen |
| s | Abstand der Düsen entlang der Bewegungsbahn |
| SI-Sn | Steuersignale für Steuerventile |
| v | Ziehgeschwindigkeit des Druckkopfs entlang der programmierten Bewegungsbahn |
| V1-Vn | Steuerventile der einzelnen Düsen |
| VR | Rückführventil |

**Patentansprüche**

1. Beschichtungseinrichtung zur Beschichtung von Bauteilen mit einem Beschichtungsmittel, insbesondere zur Lackierung von Kraftfahrzeugkarosseriebauteilen mit einem Lack, mit

   a) einem Druckkopf (14) zur Applikation des Beschichtungsmittels auf das Bauteil,

   a1) wobei der Druckkopf (14) mehrere Beschichtungsmitteldüsen aufweist zur Abgabe des Beschichtungsmittels,
   a2) während der Druckkopf (14) mehrere Düsenventile aufweist zur Steuerung des Beschichtungsmittelstroms durch die einzelnen Beschichtungsmitteldüsen, und

   b) einer Beschichtungsmittelversorgung zur Versorgung des Druckkopfs (14) mit dem zu applizierenden Beschichtungsmittel,

   b1) wobei das Beschichtungsmittel mit einem bestimmten Beschichtungsmitteldruck (p) und einer bestimmten Durchflussrate (Q) von der Beschichtungsmittelversorgung zu dem Druckkopf (14) strömt,
   b2) wobei die Beschichtungsmittelversorgung zur Förderung des Beschichtungsmittels eine Beschichtungsmittelpumpe (17) mit einer einstellbaren Förderleistung aufweist, und

   c) einer Kontrolleinheit (15, 20) zur Einstellung der Förderleistung der Beschichtungsmittelpumpe (17), wobei die Kontrolleinheit (15, 20) die Anzahl der geöffneten Düsenventile ermittelt und in Abhängigkeit von der Anzahl der geöffneten Düsenventile die Förderleistung der Beschichtungsmittelpumpe (17) einstellt,

**gekennzeichnet durch**

d) eine Bypass-Leitung zur Umgehung der Beschichtungsmittelpumpe (17) und
e) ein Bypass-Ventil (21), das den Beschichtungsmittelstrom durch die Bypass-Leitung steuert, insbesondere zum schnellen Spülen.

2. Beschichtungseinrichtung nach Anspruch 1, **dadurch gekennzeichnet,**

a) **dass** die Beschichtungsmittelpumpe (17) eine Dosierpumpe (17) ist, die das Beschichtungsmittel dosiert und zu dem Druckkopf (14) fördert, so dass die Durchflussrate im Wesentlichen unabhängig ist von Druckverhältnissen am Eingang und am Ausgang der Dosierpumpe (17), und/oder
b) **dass** die Dosierpumpe (17) eine Zahnradpumpe, eine Taumelkolbenpumpe oder eine Mikrozahnradpumpe ist, und/oder
c) **dass** die Dosierpumpe (17) mit einem Spülmittel spülbar ist, um Beschichtungsmittelreste aus der Dosierpumpe (17) auszuspülen, insbesondere bei einem Farbwechsel, und/oder
d) **dass** die Kontrolleinheit (15, 20) eine Reaktionszeit von weniger als 100ms, 60ms, 10ms, 1ms, 100$\mu$s oder 10$\mu$s hat.

3. Beschichtungseinrichtung nach einem der vorhergehenden Ansprüche, **dadurch gekennzeichnet,**

a) **dass** die Beschichtungsmittelversorgung einen Kolbendosierer aufweist, um das Beschichtungsmittel kontrolliert zuzuführen, oder
b) **dass** die Beschichtungsmittelversorgung einen Kartuschendosierer aufweist mit einer beschichtungsmittelgefüllten Kartusche mit einem Kartuschenauslass zur Abgabe des Beschichtungsmittels und einem Kartuscheneinlass zur Einleitung eines Verdrängungsfluids, welches das in der Kartusche befindliche Beschichtungsmittel verdrängt und durch den Kartuschenauslass ausstößt, oder
c) **dass** die Beschichtungsmittelversorgung ein Beschichtungsmittelreservoir aufweist, insbesondere eine Ringleitung, insbesondere mit einem Druckregler zur Regelung des Beschichtungsmitteldrucks und/oder mit einem Drucksensor zur Messung des Beschichtungsmitteldrucks.

4. Beschichtungseinrichtung nach einem der vorhergehenden Ansprüche, **gekennzeichnet durch**

a) einen Drucksensor (19), der den Beschichtungsmitteldruck (p) misst, insbesondere an dem Druckkopf (14) misst oder an der Beschichtungsmittelpumpe (17), und/oder
b) eine Durchflussmesszelle (18), welche die Durchflussrate (Q) misst, insbesondere den Volumenstrom oder den Massenstrom des Beschichtungsmittels, und/oder
c) einen Regler (20), der die Beschichtungsmittelpumpe (14) in Abhängigkeit von dem gemessenen Beschichtungsmitteldruck (p) und/oder in Abhängigkeit von der gemessenen Durchflussrate (Q) des Beschichtungsmittels ansteuert.

5. Beschichtungseinrichtung nach Anspruch 4, **dadurch gekennzeichnet, dass** der Regler (20) die Beschichtungsmittelpumpe (17) in Abhängigkeit von dem gemessenen Beschichtungsmitteldruck (p) und/oder in Abhängigkeit von dem gemessenen Beschichtungsmittelstrom (Q) ansteuert,

a) um den Beschichtungsmitteldruck (p) auf einen vorgegebenen Soll-Druck zu regeln, oder
b) um die Durchflussrate (Q) des Beschichtungsmittels auf eine vorgegebenen Soll-Durchflussrate zu regeln.

6. Beschichtungseinrichtung nach Anspruch 5, **dadurch gekennzeichnet,**

a) **dass** der Regler (20) umschaltbar ist zwischen einem Druckregelbetrieb und einem Mengenstromregelbetrieb,
b) **dass** der Regler (20) in dem Druckregelbetrieb den Beschichtungsmitteldruck (p) auf den vorgegebenen Soll-Druck regelt, und
c) **dass** der Regler (20) in dem Mengenstromregelbetrieb die Durchflussrate (Q) des Beschichtungsmittels auf die vorgegebene Soll-Durchflussrate regelt.

7. Beschichtungseinrichtung nach Anspruch 6, **dadurch gekennzeichnet,**

a) **dass** eine Steuereinheit (15) vorgesehen ist,
b) **dass** die Steuereinheit (15) den Regler (20) zwischen dem Druckregelbetrieb und dem Mengenstromregelbetrieb umschaltet,
c) **dass** die Steuereinheit (15) den Regler (20) in den Druckregelbetrieb schaltet, wenn der Druckkopf (14;) in einem instationären Zustand betrieben wird, in dem Düsenventile des Druckkopfs (14) geöffnet oder geschlossen werden,
d) **dass** die Steuereinheit (15) den Regler (20) in den Mengenstromregelbetrieb schaltet, wenn der Druckkopf (14) in einem stationären Zustand betrieben wird, in dem keine Düsenventile des Druckkopfs (14) geöffnet oder geschlossen werden, und/oder

e) **dass** die Steuereinheit (15) das Bypass-Ventil (21) ansteuert und zwar in Abhängigkeit von dem stationären Zustand und dem instationären Zustand oder bei einem Farbwechsel.

8. Beschichtungseinrichtung nach einem der Ansprüche 1 bis 3, **dadurch gekennzeichnet,**

a) **dass** die Beschichtungsmittelversorgung eine Beschichtungsmittelzuführung (2) aufweist, insbesondere als Ringleitung, um das Beschichtungsmittel zuzuführen,

b) **dass** die Beschichtungsmittelversorgung eine Beschichtungsmittelrückführung (3) aufweist, insbesondere als Ringleitung, um das Beschichtungsmittel und/oder Spülmittel zurückzuführen,

c) **dass** die Beschichtungsmittelversorgung ein Druckstellglied (5-7) aufweist, das den Beschichtungsmittelstrom von der Beschichtungsmittelzuführung (2) in die Beschichtungsmittelrückführung (3) einstellt, wobei das Druckstellglied ( ) optional wie folgt ausgebildet ist:

c1) als Rücklaufdruckregler, der den Beschichtungsmittelstrom in die Beschichtungsmittelrückführung einstellt und dadurch den Beschichtungsmitteldruck stromaufwärts vor dem Rücklaufdruckregler und damit auch an dem Beschichtungsmittelauslass auf den vorgegebenen Soll-Druck regelt, oder

c2) als steuerbares Rücklaufventil, das den Beschichtungsmittelstrom in die Beschichtungsmittelrückführung einstellt, oder

c3) als doppelt wirkendes Steuerventil (5-7), das in Abhängigkeit von seiner Ventilstellung

i) entweder die Beschichtungsmittelzuführung (2) mit dem Beschichtungsmittelauslass (1) verbindet und dabei die Beschichtungsmittelrückführung (3) verschließt,

ii) oder die Beschichtungsmittelzuführung (2) mit der Beschichtungsmittelrückführung (3) verbindet und dabei den Beschichtungsmittelauslass (1) verschließt.

d) **dass** die Beschichtungsmittelversorgung einen Beschichtungsmittelauslass (1) aufweist, der mit der Beschichtungsmittelzuführung (2) verbunden werden kann oder mit der Beschichtungsmittelzuführung (2) verbunden ist.

9. Beschichtungseinrichtung nach Anspruch 8, **dadurch gekennzeichnet,**

a) **dass** das doppelt wirkende Steuerventil (5-7) in dem Druckkopf (14) angeordnet ist, und/oder

b) **dass** der von dem doppelt wirkenden Steuerventil (5-7) gesteuerte Beschichtungsmittelauslass (1) eine Düsenöffnung (1) des Druckkopfs (14) ist, und/oder

c) **dass** das doppelt wirkende Steuerventil (5-7) zu der Beschichtungsmittelrückführung (3) hin und zu dem Beschichtungsmittelauslass (1) hin den gleichen freien Strömungsquerschnitt aufweist, und/oder

d) **dass** die Beschichtungsmittelversorgung einen Pufferspeicher aufweist, der das Beschichtungsmittel aufnimmt und Druckschwankungen des Beschichtungsmittels abpuffert.

10. Beschichtungseinrichtung nach Anspruch 9, **dadurch gekennzeichnet,**

a) **dass** der Pufferspeicher in dem Druckkopf (14) angeordnet ist, oder

b) **dass** der Pufferspeicher außerhalb des Druckkopfs (14) und stromaufwärts vor dem Druckkopf (14) angeordnet ist.

11. Beschichtungseinrichtung nach Anspruch 9 oder 10, **dadurch gekennzeichnet,**

a) **dass** der Pufferspeicher einen Zylinder mit einem Kolben aufweist, der in dem Zylinder verschiebbar ist, und/oder

b) **dass** der Kolben gespannt wird durch

b1) eine Feder,
b2) Druckluft,
b3) einen elektrischen Aktor,
b4) einen piezoelektrischen Aktor oder
b5) einen magnetischen Aktor.

12. Beschichtungseinrichtung nach einem der vorhergehenden Ansprüche, **dadurch gekennzeichnet,**

a) dass die Beschichtungseinrichtung einen Manipulator aufweist, insbesondere einen mehrachsigen Beschichtungsroboter mit einer seriellen Roboterkinematik,

b) dass der Manipulator den Druckkopf (14) entlang einer programmierten Bewegungsbahn (33) mit einer bestimmten Ziehgeschwindigkeit über die Oberfläche des zu beschichtenden Bauteils bewegt,

c) dass der Druckkopf (14) mehrere Beschichtungsmitteldüsen aufweist und das Beschichtungsmittel durch die Beschichtungsmitteldüsen ausstößt,

d) dass die benachbarten Beschichtungsmitteldüsen in dem Druckkopf (14) in einem bestimmten Abstand (s) entlang der programmierten Bewegungsbahn angeordnet sind,

e) dass die Beschichtungsmittelpumpe mit einer bestimmten Zeitkonstante ($\tau$) auf eine Änderung der gewünschten Fördermenge reagiert, wobei die Zeitkonstante ($\tau$) die Zeitspanne angibt, die bei einer Änderung der gewünschten Fördermenge vergeht, bis 63,2% der gewünschten Änderung der Fördermenge umgesetzt sind, und

g) dass folgende Formel gilt:

$$s > v \cdot \tau$$

mit:

s: Abstand der benachbarten Beschichtungsmitteldüsen in dem Druckkopf (14) entlang der programmierten Bewegungsbahn,

v: Ziehgeschwindigkeit des Druckkopfs (14) entlang der programmierten Roboterbahn,

$\tau$: Zeitkonstante der Beschichtungsmittelpumpe.

13. Beschichtungseinrichtung nach Anspruch 12, **dadurch gekennzeichnet,**

a) **dass** die Beschichtungsmitteldüsen in dem Druckkopf (14) entlang einer Düsenlinie (35) angeordnet sind,

b) **dass** der Druckkopf (14) mit der Düsenlinie (35) relativ zu der programmierten Bewegungsbahn drehbar ist, wobei die Düsenlinie mit der programmierten Bewegungsbahn einen Druckkopfwinkel ($\alpha$) einschließt,

c) **dass** der Druckkopf so gedreht wird, dass folgende Formel gilt:

$$v \cdot \tau < s = d \cdot \cos \alpha$$

mit:

s: Abstand der benachbarten Beschichtungsmitteldüsen in dem Druckkopf (14) entlang der programmierten Bewegungsbahn,

d: Abstand der benachbarten Beschichtungsmitteldüsen entlang der Düsenlinie,

v: Ziehgeschwindigkeit des Druckkopfs (14) entlang der programmierten Roboterbahn,

$\tau$: Zeitkonstante der Beschichtungsmittelpumpe,

$\alpha$: Drehwinkel zwischen der Düsenlinie und der programmierten Bewegungsbahn des Druckkopfs (14).

14. Beschichtungseinrichtung nach einem der vorhergehenden Ansprüche, **dadurch gekennzeichnet,**

a) **dass** der Druckkopf (14) einen eng begrenzten Beschichtungsmittelstrahl abgibt im Gegensatz zu einem Sprühnebel, und/oder

b) **dass** der Druckkopf (14) einen Tröpfchenstrahl abgibt im Gegensatz zu einem in Strahllängsrichtung zusammen hängenden Beschichtungsmittelstrahl, oder

c) **dass** der Druckkopf (14) einen in Strahllängsrichtung zusammen hängenden Beschichtungsmittelstrahl abgibt im Gegensatz zu einem Tröpfchenstrahl, und/oder

d) **dass** der Beschichtungsmitteldruck mit einer maximalen Schwankungsbreite von $\pm 500$mbar, $\pm 200$mbar, $\pm 100$mbar, $\pm 50$mbar kontrolliert wird, und/oder

e) **dass** der Druckkopf (14) einen Auftragswirkungsgrad von mindestens 80%, 90%, 95% oder 99% aufweist, so dass im Wesentlichen das gesamte applizierte Beschichtungsmittel vollständig auf dem Bauteil abgelagert wird, ohne dass Overspray entsteht, und/oder

f) **dass** der Druckkopf (14) eine Flächenbeschichtungsleistung von mindestens 0,5 m$^2$/min, 1m$^2$/min oder mindestens 3m$^2$/min aufweist, und/oder

g) **dass** der Volumenstrom des applizierten Beschichtungsmittels und damit die Austrittsgeschwindigkeit des Beschichtungsmittels so eingestellt wird, dass das Beschichtungsmittel nach dem Auftreffen auf das Bauteil nicht von dem Bauteil abprallt, und/oder

h) **dass** die Austrittsgeschwindigkeit des Beschichtungsmittels aus dem Druckkopf (14) mindestens 5 m/s, 7 m/s oder 10 m/s beträgt, und/oder

i) **dass** die Austrittsgeschwindigkeit des Beschichtungsmittels aus dem Druckkopf (14) höchstens 30 m/s, 20 m/s oder 10 m/s beträgt, und/oder

j) **dass** der Applikationsabstand mindestens 4mm, 10 mm oder 40 mm und/oder beträgt, und/oder

k) **dass** der Applikationsabstand höchstens 200mm oder 100 mm beträgt, und/oder

l) **dass** der Druckkopf (14) mittels eines Manipulators, insbesondere mittels eines mehrachsigen Roboters bewegt wird, und/oder

m) **dass** das Beschichtungsmittel ein Lack ist, insbesondere ein Basislack, ein Klarlack, ein Effektlack, ein Mica-Lack oder ein Metallic-Lack, und/oder

n) **dass** das Beschichtungsmittel ein Wasserlack oder ein Lösemittellack ist, und/oder

o) **dass** der Druckkopf (14) mindestens einen elektrisch ansteuerbaren Aktor aufweist, um Tropfen des Beschichtungsmittels aus dem Druckkopf (14) auszustoßen, insbesondere einen Magnetaktor oder einen Piezoaktor.

15. Betriebsverfahren für eine Beschichtungseinrichtung mit einem Druckkopf (14) mit mehreren mehrere Beschichtungsmitteldüsen und mehreren Düsenventilen zur Steuerung des Beschichtungsmittelstroms durch die einzelnen Beschichtungsmitteldüsen und einer Beschichtungsmittelversorgung, die ein Beschichtungsmittel mit einem bestimmten Beschichtungsmitteldruck und einer bestimmten Durchflussrate zu dem Druckkopf (14) fördert, wobei die Beschichtungsmittelversorgung eine Beschichtungsmittelpumpe (17) mit einer einstellbaren Förderleistung aufweist, insbesondere für eine Beschichtungseinrichtung nach einem der vorhergehenden Ansprüche, wobei eine Kontrolleinheit (15, 20) die Anzahl der geöffneten Düsenventile ermittelt und in Abhängigkeit von der Anzahl der geöffneten Düsenventile die Förderleistung der Beschichtungsmittelpumpe (17) einstellt, **gekennzeichnet durch** folgende Schritte:

a) Umgehung der Beschichtungsmittelpumpe (17) durch eine Bypass-Leitung und
b) Steuern des Beschichtungsmittelstroms durch die Bypass-Leitung mittels eines Bypass-Ventils (21), insbesondere zum schnellen Spülen.

**Claims**

1. Coating device for coating of components with a coating agent, in particular for painting motor vehicle body components with a paint, with

a) a printhead (14) for applying the coating agent to the component,

a1) wherein the printhead (14) comprises several coating agent nozzles for application of the coating agent,
a2) wherein the printhead (14) comprises a plurality of nozzle valves for controlling the flow of coating agent through said individual coating agent nozzles, and

b) a coating agent supply for supplying the printhead (14) with the coating agent to be applied,

b1) wherein the coating agent flows at a specific coating agent pressure (p) and a specific flow rate (Q) from the coating agent supply to the printhead (14),

b2) wherein the coating agent supply has a coating agent pump (17) with an adjustable delivery rate for conveying the coating agent,

c) a control unit (15, 20) for setting the delivery rate of the coating agent pump (17), wherein the control unit (15, 20) determines the number of opened nozzle valves and sets the delivery rate of the coating agent pump (17) as a function of the number of opened nozzle valves,

**characterized by**

d) a bypass line for bypassing the coating agent pump (17), and
e) a bypass valve (21) controlling the coating agent flow through the bypass line, in particular for rapid flushing.

2. Coating device in accordance with claim 1, **characterized in**

a) **that** the coating agent pump (17) is a metering pump (17) which meters the coating agent and delivers it to the printhead (14) so that the flow rate is substantially independent of pressure conditions at the inlet and outlet of the metering pump (17), and/or
b) **that** the metering pump (17) is a gear pump, a wobble piston pump or a micro gear pump, and/or
c) **that** the metering pump (17) can be flushed with a flushing agent in order to flush coating agent residues out of the metering pump (17), in particular in the event of a colour change, and/or
d) **that** the control unit (15, 20) has a response time of less than 100ms, 60ms, 10ms, 1ms, 100s or 10s.

3. Coating device according to one of the preceding claims, **characterized in**

a) **that** the coating agent supply comprises a piston dispenser to supply the coating agent in a controlled manner, or
b) **that** the coating agent supply comprises a cartridge dispenser having a coating agent-filled cartridge with a cartridge outlet for discharging the coating agent and a cartridge inlet for introducing a displacement fluid which displaces the coating agent in the cartridge and ejects it through the cartridge outlet, or
c) **that** the coating agent supply has a coating agent reservoir, in particular a ring line, in particular with a pressure regulator for regulating the coating agent pressure and/or with a pressure sensor for measuring the coating agent pressure.

4. Coating device according to one of the preceding claims, **characterized by**

a) a pressure sensor (19) which measures the coating agent pressure (p), in particular on the printhead (14) or on the coating agent pump (17), and/or
b) a flow measuring cell (18) which measures the flow rate (Q), in particular the volume flow or the mass flow of the coating agent, and/or
c) a controller (20) which controls the coating agent pump (14) as a function of the measured coating agent pressure (p) and/or as a function of the measured flow rate (Q) of the coating agent.

5. Coating device according to claim 4, **characterized in that** the controller (20) controls the coating agent pump (17) as a function of the measured coating agent pressure (p) and/or as a function of the measured coating agent flow (Q),

a) to control the coating agent pressure (p) to a pre-set target pressure, or
b) to control the flow rate (Q) of the coating agent to a predetermined target flow rate.

6. Coating device according to claim 5, **characterized in**

a) **that** the controller (20) can be switched between a pressure control mode and a flow rate control mode,
b) **that** the controller (20) regulates the coating agent pressure (p) to the predetermined target pressure in the pressure control mode, and
c) **that** the controller (20) regulates the flow rate (Q) of the coating agent to the predetermined target flow rate in the flow rate control mode.

7. Coating device according to claim 6, **characterized in**

a) **that** a control unit (15) is provided,
b) **that** the control unit (15) switches the regulator (20) between the pressure control mode and the flow rate control mode,
c) **that** the control unit (15) switches the regulator (20) to the pressure control mode when the printhead (14) is operated in a transient state in which nozzle valves of the printhead (14) are opened or closed,
d) **that** the control unit (15) switches the controller (20) into the flow rate control mode when the printhead (14) is operated in a stationary state in which no nozzle valves of the printhead (14) are opened or closed; and/or
e) **that** the control unit (15) controls the bypass valve (21) as a function of the stationary state and the transient state or during a colour change.

8. Coating device in accordance with one of claims 1 to 3, **characterized in**

a) **that** the coating agent supply has a coating agent feed (2), in particular as a ring line, in order to supply the coating agent,
b) **that** the coating agent supply has a coating agent return (3), in particular as a ring line, in order to return the coating agent and/or flushing agent,
c) **that** the coating agent supply has a pressure actuator (5-7) which adjusts the coating agent flow from the coating agent feed (2) into the coating agent return (3), wherein the pressure actuator is optionally configured as follows:

c1) as a return pressure regulator which adjusts the coating agent flow into the coating agent return and thereby regulates the coating agent pressure upstream of the return pressure regulator and thus also at the coating agent outlet to the predetermined desired pressure, or
c2) as a controllable return valve which adjusts the coating agent flow into the coating agent return; or
c3) as a double-acting control valve (5-7) which, as a function of its valve position

i) either connects the coating agent feed (2) with the coating agent outlet (1) and thereby closes the coating agent return (3),
ii) or connects the coating agent feed (2) with the coating agent return (3) and thereby closes the coating agent outlet (1),

d) **that** the coating agent supply has coating agent outlet (1) which can be connected to or is connected with the coating agent feed (2),

9. Coating device according to claim 8, **characterized in**

a) **that** the double-acting control valve (5-7) is arranged in the printhead (14), and/or
b) **that** the coating agent outlet (1) controlled by the double-acting control valve (5-7) is a nozzle opening (1) of the printhead (14), and/or

c) **that** the double-acting control valve (5-7) has the same free flow cross-section towards the coating agent return (3) and towards the coating agent outlet (1), and/or
d) **that** the coating agent supply comprises a buffer reservoir which receives the coating agent and buffers pressure fluctuations of the coating agent.

10. Coating device according to claim 9, **characterized in**

a) **that** the buffer reservoir is arranged in the printhead (14), or
b) **that** the buffer reservoir is arranged outside the printhead (14) and upstream of the printhead (14).

11. Coating device according to claim 9 or 10, **characterized in**

a) **that** the buffer reservoir has a cylinder with a piston which can be displaced in the cylinder, and/or
b) **that** the piston is tensioned by

b1) a spring,
b2) compressed air,
b3) an electric actuator,
b4) a piezoelectric actuator; or
b5) a magnetic actuator.

12. Coating device in accordance with one of the preceding claims, **characterized in**

a) that the coating device has a manipulator, in particular a multi-axis coating robot with serial robot kinematics,
b) that the manipulator moves the printhead (14) along a programmed movement path (33) at a predetermined drawing speed over the surface of the component to be coated,
c) that the printhead (14) comprises a plurality of coating agent nozzles and ejects the coating agent through the coating agent nozzles,
d) that the adjacent coating agent nozzles are arranged in the printhead (14) at a predetermined distance (s) along the programmed path of travel,
e) that the coating agent pump reacts with a specific time constant ($\tau$) to a change in the desired delivery quantity, the time constant ($\tau$) indicating the period of time which elapses in the event of a change in the desired delivery quantity until 63.2% of the desired change in the delivery quantity has been implemented, and
g) that the following formula applies:

$$ s > v - \tau $$

with:

s: distance of the adjacent coating agent nozzles in the printhead (14) along the programmed movement path of movement,
v: drawing speed of the printhead (14) along the programmed robot path,
$\tau$: time constant of the coating pump.

13. Coating device according to claim 12, **characterized in that**

a) that the coating agent nozzles are arranged in the printhead (14) along a nozzle line (35),
b) that the printhead (14) is rotatable with the nozzle line (35) relative to the programmed path of travel, wherein the nozzle line with the programmed path of travel includes a printhead angle ($\alpha$),
c) the printhead is rotated so that the following formula applies:

$$ v \cdot \tau < s = d \cdot \cos \alpha $$

with:

s: distance of the adjacent coating agent nozzles in the printhead (14) along the programmed path of movement,
d: distance of the adjacent coating agent nozzles along the nozzle line,
v: drawing speed of the printhead (14) along the programmed robot path,
$\tau$: time constant of the coating pump,
$\alpha$: rotation angle between the nozzle line and the programmed trajectory of the printhead (14).

14. Coating device in accordance with one of the preceding claims, **characterised in**

a) **that** the printhead (14) emits a narrowly limited jet of coating agent in contrast to a spray mist, and/or
b) **that** the printhead (14) emits a droplet jet as opposed to a coating agent jet which is connected in the longitudinal direction of the jet, or
c) **that** the printhead (14) emits a coating agent jet which is connected in the jet longitudinal direction in contrast to a droplet jet, and/or
d) **that** the coating agent pressure is controlled with a maximum variation of $\pm$500mbar, $\pm$200mbar, $\pm$100mbar, $\pm$50mbar; and/or
e) **that** the printhead (14) has an application efficiency of at least 80%, 90%, 95% or 99% such that substantially all of the applied coating agent is completely deposited on the component without overspray, and/or

f) **that** the printhead (14) has an area coating capacity of at least 0.5 m$^2$/min, 1m$^2$/min or at least 3m$^2$/min, and/or

g) **that** the volume flow of the applied coating agent and thus the exit velocity of the coating agent is set in such a way that the coating agent does not bounce off the component after it hits the component, and/or

h) **that** the exit velocity of the coating agent from the printhead (14) is at least 5 m/s, 7 m/s or 10 m/s, and/or

i) **that** the exit velocity of the coating agent from the printhead (14) is at most 30 m/s, 20 m/s or 10 m/s, and/or

j) **that** the application distance is at least 4 mm, 10 mm or 40 mm and/or; and/or

k) **that** the application distance is not more than 200 mm or 100 mm; and/or

l) **that** the printhead (14) is moved by means of a manipulator, in particular by means of a multi-axis robot, and/or

m) **that** the coating agent is a paint, in particular a base coat, a clear coat, an effect paint, a mica paint or a metallic paint, and/or

n) **that** the coating agent is a water-based paint or a solvent-based paint; and/or

o) **that** the printhead (14) has at least one electrically controllable actuator in order to eject drops of the coating agent from the printhead (14), in particular a magnetic actuator or a piezo actuator.

15. Operating method for a coating device with a printhead (14) with several coating agent nozzles and several nozzle valves for controlling the coating agent flow through the individual coating agent nozzles and a coating agent supply which conveys a coating agent with a specific coating agent pressure and a specific flow rate to the printhead (14), wherein the coating agent supply has a coating agent pump (17) with an adjustable delivery rate, in particular for a coating device according to one of the preceding claims, wherein a control unit (15, 20) determines the number of opened nozzle valves and sets the delivery rate of the coating agent pump (17) as a function of the number of opened nozzle valves, **characterized by** the following steps:

a) bypassing the coating agent pump (17) by a bypass line and

b) controlling the coating agent flow through the bypass line by a bypass valve (21), in particular for rapid flushing.

**Revendications**

1. Dispositif de revêtement pour le revêtement de composants avec un produit de revêtement, plus particulièrement pour la peinture de composants de carrosserie de véhicule automobile avec une peinture, avec

a) une tête d'impression (14) pour l'application du produit de revêtement sur le composant

a1) dans lequel la tête d'impression (14) comprend plusieurs buses de produit de revêtement pour la distribution du produit de revêtement,

a2) tandis que la tête d'impression (14) comprend plusieurs soupapes de buses pour le contrôle du flux de produit de revêtement à travers les différentes buses de produit de revêtement et

b) une alimentation en produit de revêtement pour l'alimentation de la tête d'impression (14) avec le produit de revêtement à appliquer,

b1) dans lequel le produit de revêtement s'écoule avec une pression de produit de revêtement (p) déterminée et un débit (Q) déterminé de l'alimentation de produit de revêtement vers la tête d'impression (14),

b2) dans lequel l'alimentation en produit de revêtement comprend, pour le transport du produit de revêtement, une pompe de produit de revêtement (17) avec une puissance de pompage réglable et

c) une unité de contrôle (15, 20) pour le réglage de la puissance de pompage de la pompe de produit de revêtement (17), dans lequel l'unité de contrôle (15, 20) détermine le nombre de soupapes de buses ouvertes et, en fonction du nombre de soupapes de buses ouvertes, règle la puissance de pompage de la pompe de produit de revêtement (17),

**caractérisé par**

d) une conduite de dérivation pour le contournement de la pompe de produit de revêtement (17) et

e) une soupape de dérivation (21) qui contrôle le flux de produit de revêtement à travers la conduite de dérivation, plus particulièrement pour un rinçage rapide.

2. Dispositif de revêtement selon la revendication 1, **caractérisé en ce que**

a) la pompe de produit de revêtement (17) est une pompe de dosage (17) qui dose le produit de revêtement et le transporte vers la tête d'impression (14), de façon à ce que le débit soit globalement indépendant des conditions de pression à l'entrée et à la sortie de la pompe de dosage (17) et/ou

b) la pompe de dosage (17) est une pompe à engrenages, une pompe à piston oscillant ou une pompe à micro-engrenages et/ou

c) la pompe de dosage (17) peut être rincée avec un produit de rinçage afin d'éliminer les résidus de produit de revêtement de la pompe de dosage (17), plus particulièrement lors d'un changement de couleur et/ou

d) l'unité de contrôle (15, 20) présente un temps de réaction inférieur à 100 ms, 60 ms, 10 ms, 1 ms, 100 $\mu$s ou 10 $\mu$s.

3. Dispositif de revêtement selon l'une des revendications précédentes, **caractérisé en ce que**

a) l'alimentation de produit de revêtement comprend un doseur à piston afin d'introduire le produit de revêtement de manière contrôlée ou

b) l'alimentation de produit de revêtement comprend un doseur à cartouche avec une cartouche remplie de produit de revêtement avec une sortie de cartouche pour la distribution du produit de revêtement et une entrée de cartouche pour l'introduction d'un fluide de refoulement qui refoule le produit de revêtement se trouvant dans la cartouche et l'éjecte à travers la sortie de cartouche ou

c) l'alimentation de produit de revêtement comprend un réservoir de produit de revêtement, plus particulièrement une conduite annulaire, plus particulièrement avec un régulateur de pression pour la régulation de la pression du produit de revêtement et/ou avec un capteur de pression pour la mesure de la pression du produit de revêtement.

4. Dispositif de revêtement selon l'une des revendications précédentes, **caractérisé par**

a) un capteur de pression (19), qui mesure la pression du produit de revêtement (p), plus particulièrement au niveau de la tête d'impression (14) ou au niveau de la pompe de produit de revêtement (17) et/ou

b) une cellule de mesure de débit (18) qui mesure le débit (Q), plus particulièrement le débit volumique ou le débit massique du produit de revêtement et/ou

c) un régulateur (20) qui contrôle la pompe de produit de revêtement (14) en fonction de la pression de produit de revêtement (p) mesurée et/ou en fonction du débit (Q) mesuré du produit de revêtement.

5. Dispositif de revêtement selon la revendication 4, **caractérisé en ce que** le régulateur (20) contrôle la pompe de produit de revêtement (17) en fonction de la pression de produit de revêtement (p) mesurée et/ou en fonction du débit de produit de revêtement (Q) mesuré,

a) afin de réguler la pression du produit de revêtement (p) à une pression de consigne prédéfinie ou

b) afin de réguler le débit (Q) du produit de revêtement à un débit de consigne prédéfini.

6. Dispositif de revêtement selon la revendication 5, **caractérisé en ce que**

a) le régulateur (20) peut être commuté entre un mode de régulation de pression et un mode de régulation de débit,

b) dans le mode de régulation de pression, le régulateur (20) régule la pression du produit de revêtement (p) à la pression de consigne prédéfinie et

c) dans le mode de régulation de débit, le régulateur (20) régule le débit (Q) du produit de revêtement au débit de consigne prédéfini.

7. Dispositif de revêtement selon la revendication 6, **caractérisé en ce que**

a) une unité de commande (15) est prévue,

b) l'unité de commande (15) commute le régulateur (20) entre le mode de régulation de pression et le mode de régulation de débit,

c) l'unité de commande (15) commute le régulateur (20) dans le mode de régulation de pression lorsque la tête d'impression (14) fonctionne dans un état non stationnaire dans lequel les soupapes de buses de la tête d'impression (14) sont ouvertes ou fermées,

d) l'unité de commande (15) commute le régulateur (20) dans le mode de régulation de débit lorsque la tête d'impression (14) fonctionne dans un état stationnaire dans lequel aucune soupape de buse de la tête d'impression (14) n'est ouverte ou fermée et/ou

e) l'unité de commande (15) contrôle la soupape de dérivation (21) en fonction de l'état stationnaire et de l'état non stationnaire ou lors d'un changement de couleur.

8. Dispositif de revêtement selon l'une des revendications 1 à 3,
**caractérisé en ce que**

a) l'alimentation de produit de revêtement comprend une arrivée de produit de revêtement (2), plus particulièrement sous la forme d'une conduite annulaire, afin d'introduire le produit de revêtement,

b) l'alimentation de produit de revêtement comprend un retour de produit de revêtement (3), plus particulièrement sous la forme d'une conduite annulaire, afin de retourner le produit de revêtement et/ou le produit de rinçage,

c) l'alimentation de produit de revêtement comprend un organe de réglage de la pression (5 - 7) qui ajuste le débit de produit de revêtement de l'arrivée de produit de revêtement (2) vers le retour de produit de revêtement (3), dans lequel l'organe de réglage de pression (5 - 7) est conçu en option comme suit :

c1) comme un régulateur de pression de retour qui ajuste le débit de produit de revêtement vers le retour de produit de revêtement et donc régule la pression de produit de revêtement en amont du régulateur de pression de retour et la régule donc également au niveau de la sortie de produit de revêtement à la pression de consigne prédéfinie ou

c2) comme une soupape de retour qui ajuste le débit de produit de revêtement vers le retour de produit de revêtement ou

c3) comme une soupape de commande à double action (5 - 7) qui, en fonction de sa position,

i) soit relie le retour de produit de revêtement (2) avec la sortie de produit de revêtement (1) et donc obture le retour de produit de revêtement (3),

ii) soit relie l'arrivée de produit de revêtement (2) avec le retour de produit de revêtement (3) et donc obture la sortie de produit de revêtement (1).

d) l'alimentation de produit de revêtement comprend une sortie de produit de revêtement (1) qui peut être reliée avec l'arrivée de produit de revêtement (2) ou qui est reliée avec le retour de produit de revêtement (2).

9. Dispositif de revêtement selon la revendication 8, **caractérisé en ce que**

a) la soupape de commande à double action (5 - 7) est disposée dans la tête d'impression et/ou

b) la sortie de produit de revêtement (1) contrôlée par la soupape de commande à double action (5 - 7) est une ouverture de buse (1) de la tête d'impression (14) et/ou

c) la soupape de commande à double action (5 - 7) présente, en direction du retour de produit de revêtement (3) et en direction de la sortie de produit de revêtement (1), la même section d'écoulement libre et/ou

d) l'alimentation de produit de revêtement comprend un réservoir tampon qui loge le produit de revêtement et amortit les variations de pression du produit de revêtement.

10. Dispositif de revêtement selon la revendication 9, **caractérisé en ce que**

a) le réservoir tampon est disposé dans la tête d'impression ou

b) le réservoir tampon est disposé à l'extérieur de la tête d'impression et en amont de la tête d'impression.

11. Dispositif de revêtement selon la revendication 9 ou 10, **caractérisé en ce que**

a) le réservoir tampon comprend un cylindre avec un piston qui coulisse dans le cylindre et/ou

b) le piston est sollicité par

b1) un ressort
b2) de l'air comprimé
b3) un actionneur électrique
b4) un actionneur piézo-électrique
b5) un actionneur magnétique.

12. Dispositif de revêtement selon l'une des revendications précédentes, **caractérisé en ce que**

a) le dispositif de revêtement comprend un manipulateur, plus particulièrement un robot de revêtement multi-axial avec une cinématique de robot en série,

b) le manipulateur déplace la tête d'impression (14) le long d'une trajectoire programmée (33) avec une vitesse de traction déterminée au-dessus de la surface du composant à revêtir,

c) la tête d'impression (14) comprend plusieurs buses de produit de revêtement et éjecte le produit de revêtement à travers les buses de produit de revêtement,

d) les buses de produit de revêtement adjacentes de la tête d'impression (14) sont disposées à une distance (s) déterminée le long de la trajectoire programmée,

e) la pompe de produit de revêtement réagit avec une constante de temps ($\tau$) déterminée à une modification du débit souhaité, dans lequel la constante de temps ($\tau$) indique le laps de temps qui s'écoule lors d'une modification du débit souhaité, jusqu'à ce que 63,2 % de la modification souhaitée du débit soit appliqué et

g) la formule suivante s'applique :

$$s > v \cdot \tau$$

avec :

s : distance entre les buses de produit de revêtement dans la tête d'impression (14) le long de la trajectoire programmée,

v : vitesse de traction de la tête d'impression (14) le long de la trajectoire de robot programmée,

$\tau$ : constante de temps de la pompe de produit de revêtement.

**13.** Dispositif de revêtement selon la revendication 12, **caractérisé en ce que**

a) les buses de produit de revêtement sont disposées dans la tête d'impression (14) le long d'une ligne de buses (35),

b) la tête d'impression (14), avec la ligne de buses (35), peut être mise en rotation par rapport à la trajectoire programmée, dans lequel la ligne de buses forme, avec la trajectoire programmée, un angle de tête d'impression ($\alpha$),

c) la tête d'impression est mise en rotation de façon à ce que la formule suivante s'applique :

$$v \cdot \tau < s = d \cdot \cos \alpha$$

avec :

s : distance entre les buses de produit de revêtement dans la tête d'impression (14) le long de la trajectoire programmée,

d : distance des buses de produit de revêtement adjacentes le long de la ligne de buses,

v : vitesse de traction de la tête d'impression (14) le long de la trajectoire de robot programmée,

$\tau$ : constante de temps de la pompe de produit de revêtement,

$\alpha$ : angle de rotation entre la ligne de buses et la trajectoire programmée de la tête d'impression (14).

**14.** Dispositif de revêtement selon l'une des revendications précédentes, **caractérisé en ce que**

a) la tête d'impression (14) émet un jet de produit de revêtement étroitement limité et non un brouillard de pulvérisation et/ou

b) la tête d'impression (14) émet un jet de gouttelettes et non un jet de produit de revêtement cohérent dans la direction longitudinale du jet ou

c) la tête d'impression (14) émet un jet de produit de revêtement cohérent dans la direction longitudinale du jet et non un jet de gouttelettes et/ou

d) la pression du produit de revêtement est contrôlée avec une plage de variation maximale de $\pm 500$ mbar, $\pm 200$ mbar, $\pm 100$ mbar, $\pm 50$ mbar et/ou

e) la tête d'impression (14) présente un rendement d'application d'au moins 80 %, 90 %, 95 % ou 99 %, de façon à ce que globalement tout le produit de revêtement appliqué se dépose entièrement sur le composant, sans l'apparition d'une pulvérisation excessive et/ou

f) la tête d'impression (14) présente une performance de revêtement de surface d'au moins 0,5 $m^2$/min, 1 $m^2$/min ou d'au moins 3 $m^2$/min et/ou

g) le débit volumique du produit de revêtement à appliquer et donc la vitesse de sortie du produit de revêtement est ajustée de façon à ce que le produit de revêtement ne rebondisse pas du composant après l'impact sur le composant et/ou

h) la vitesse de sortie du produit de revêtement hors de la tête d'impression (14) est d'au moins 5 m/s, 7 m/s ou 10 m/s et/ou

i) la vitesse de sortie du produit de revêtement hors de la tête d'impression (14) est au maximum de 30 m/s, 20 m/s ou 10 m/s et/ou

j) la distance d'application est d'au moins 4 mm, 10 mm ou 40 mm et/ou

k) la distance d'application est au maximum de 200 mm ou 100 mm et/ou

l) la tête d'impression (14) est déplacée au moyen d'un manipulateur, plus particulièrement au moyen d'un robot multi-axial et/ou

m) le produit de revêtement est une peinture, plus particulièrement une peinture de base, un vernis, une peinture à effet, une peinture Mica ou une peinture métallique et/ou

n) le produit de revêtement est une peinture à l'eau ou une peinture à solvants et/ou

o) la tête d'impression (14) comprend au moins un actionneur contrôlable électriquement afin d'expulser les gouttes de produit de revêtement hors de la tête d'impression (14), plus particulièrement un actionneur magnétique ou un actionneur piézo-électrique.

**15.** Procédé de fonctionnement pour un dispositif de revêtement avec une tête d'impression (14) avec plusieurs buses de produit de revêtement et plusieurs soupapes de buses pour le contrôle du débit de produit de revêtement à travers les différentes buses de produit de revêtement et une alimentation de produit de revêtement qui transporte un produit de revêtement avec une pression de produit de revêtement déterminée et un débit déterminé vers la tête d'impression (14), dans lequel l'alimentation de produit de revêtement comprend une pompe de produit de revêtement (17) avec une puissance de pompage réglable, plus particulièrement pour un dispositif de revêtement selon l'une des revendications précédentes, dans lequel une unité de contrôle (15, 20) détermine le nombre de soupapes de buses ouvertes et, en fonction du nombre de soupapes de buses ouvertes, ajuste la puissance de pompage de la pompe de produit de revêtement (17), **caractérisé par** les étapes suivantes :

a) contournement de la pompe de produit de revêtement (17) par une conduite de dérivation et

b) contrôle du débit de produit de revêtement à travers la conduite de dérivation au moyen d'une soupape de dérivation (21), plus particulièrement pour un rinçage rapide.

Fig. 1A

Fig. 1B

Fig. 2

Fig. 3

20

Regler

19

p

16

Q

14

Druckkopf

17

18

21

Steuereinheit

15

# Fig. 4

23

27

22

25

F1 F2 ... Fn

Druckkopf

Zulauf

24

Rücklauf

p

...

28

Steuereinheit

F1 F2   Fn

26

# Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013002412 A1
- US 9108424 B2
- DE 102010019612 A1
- DE 102014013158 A1
- DE 102008053178 A1
- DE 102009038462 A1
- DE 102006021623 A1
- JP 2013188706 A
- US 6540835 B2
- JP 2015193129 A
- DE 102013092412 A1